# EUROPÄISCHE PATENTSCHRIFT

(11) **EP 3 372 051 B1**
(45) Veröffentlichungstag und Bekanntmachung des Hinweises auf die Patenterteilung: **05.08.2020**
(21) Anmeldenummer: 16794285.3
(22) Anmeldetag: 07.11.2016
(51) Int. Cl.: H05B 3/84, B32B 17/10

(54) **ELEKTRISCH BEHEIZBARE VERBUNDSCHEIBE MIT KAPAZITIVEM SCHALTBEREICH**
ELECTRICALLY HEATABLE COMPOUND GLAZING WITH CAPACITIVE SWITCHING RANGE
VITRE COMPOSITE POUVANT ÊTRE CHAUFFÉE ÉLECTRIQUEMENT PRÉSENTANT UNE ZONE DE COMMUTATION CAPACITIVE

(30) Priorität: 06.11.2015 EP 15193394
(43) Veröffentlichungstag der Anmeldung: 12.09.2018
(73) Patentinhaber: SAINT-GOBAIN GLASS FRANCE, 92400 Courbevoie (FR)
(72) Erfinder: KLEIN, Marcel, 52499 Baesweiler (DE); DÖRNER, Dirk, 52070 Aachen (DE)
(74) Vertreter: Gebauer, Dieter Edmund
(86) Internationale Anmeldenummer: PCT/EP2016/076885
(87) Internationale Veröffentlichungsnummer: WO 2017/077128

(56) Entgegenhaltungen:
- WO-A1-2008/113978
- WO-A1-2015/162107
- US-A- 3 995 140
- US-A1- 2013 075 383

## Beschreibung

Die Erfindung betrifft eine elektrisch beheizbare Verbundscheibe mit kapazitivem Schaltbereich, eine Scheibenanordnung, ein Verfahren zur Herstellung der Verbundscheibe und deren Verwendung.

Verbundscheiben umfassen typischerweise zwei Scheiben, beispielsweise eine Außenscheibe und eine Innenscheibe, die über eine Zwischenschicht, beispielsweise aus einer thermoplastischen Polyvinylbutyral (PVB)-Folie, miteinander verbunden sind. Elektrisch beheizbare Verbundscheiben sind beispielsweise mit Heizdrähten ausgestattet und werden in der Fahrzeugtechnik häufig eingesetzt, beispielsweise als Seitenscheibe, wie aus der DE10126869A1 oder der WO2005055667A2 bekannt ist. Die Heizdrähte sind in der Oberfläche der thermoplastischen Zwischenschicht eingebettet. Zur elektrischen Kontaktierung der Heizdrähte sind typischerweise Stromsammelleiter vorgesehen. Geeignete Stromsammelleiter sind beispielsweise Streifen einer Kupferfolie, welche mit einer externen Spannungsquelle verbunden werden. Die Heizdrähte verlaufen zwischen den Stromsammelleitern, so dass nach Anlegen einer elektrischen Spannung ein elektrischer Strom durch die Heizdrähte fließen kann, wodurch die Heizwirkung erreicht wird.

Des Weiteren ist bekannt, dass Schaltbereiche durch eine Elektrode oder durch eine Anordnung von zwei gekoppelten Elektroden ausgebildet werden können, beispielsweise als kapazitive Schaltbereiche. Nähert sich ein Objekt dem Schaltbereich an, so ändert sich die Kapazität der Flächenelektrode gegen Erde oder die Kapazität des von den zwei gekoppelten Elektroden gebildeten Kondensators. Die Kapazitätsänderung wird über eine Schaltungsanordnung oder Sensorelektronik gemessen und bei Überschreiten eines Schwellwerts wird ein Schaltsignal ausgelöst. Schaltungsanordnungen für kapazitive Schalter sind beispielsweise aus DE 20 2006 006 192 U1, EP 0 899 882 A1, US 6,452,514 B1 und EP 1 515 211 A1 bekannt.

Aus WO 2015/162107 A1 ist ein kapazitiver Sensor in Verbindung mit Heizdrähten bekannt, wobei der kapazitive Sensor keine galvanische Verbindung zu einem Stromsammelleiter zur Einleitung eines Heizstroms hat. Die US 2013/0075383 A1 zeigt ein Drahtgitter, welches als Scheibenheizung und kapazitiver Sensor dient. US 3995 140 A zeigt einen mit einer Busbar elektrisch verbundenen Feuchtigkeitssensor.

Die Aufgabe der vorliegenden Erfindung besteht darin, eine verbesserte beheizbare Verbundscheibe bereitzustellen, die einen kapazitiven Schaltbereich aufweist, der einfach und kostengünstig in die Verbundscheibe integriert werden kann und der die Durchsicht durch die Scheibe nicht oder nur wenig behindert. Mit dem kapazitiven Schaltbereich kann in einfacher Weise ein Berührungssensor gebildet werden. Die Aufgabe der vorliegenden Erfindung wird erfindungsgemäß durch eine beheizbare Verbundscheibe gemäß Anspruch 1 gelöst. Bevorzugte Ausführungen gehen aus den Unteransprüchen hervor.

Die erfindungsgemäße Verbundscheibe ist bevorzugt eine Fahrzeugscheibe wie eine Seitenscheibe, eine Windschutzscheibe, eine Heckscheibe oder eine Dachscheibe. Die erfindungsgemäße Verbundscheibe kann aber auch eine Architekturscheibe oder eine Verglasung in einem Möbel, beispielsweise einem Kühlschrank, einem Gefrierschrank oder einem elektrischen Heizkörper oder Spiegelelement sein.

Die erfindungsgemäße Verbundscheibe ist bevorzugt eine Seitenscheibe für ein öffenbares Seitenfenster eines Fahrzeugs. Darunter wird ein Seitenfenster verstanden, welches sich durch im Wesentlichen vertikale Verschiebung der Seitenscheibe in die Karosserietür hinein öffnen und wieder schließen lässt.

Die Verbundscheibe und insbesondere die Seitenscheibe weist eine Oberkante, eine Unterkante, eine Vorderkante und eine Hinterkante auf. Im Falle einer Seitenscheibe wird mit Oberkante die Seitenkante der Seitenscheibe bezeichnet, welche in Einbaulage nach oben weist. Mit Unterkante wird die Seitenkante bezeichnet, welche in Einbaulage nach unten zum Erdboden weist. Mit Vorderkante wird die Seitenkante bezeichnet, welche in Fahrtrichtung nach vorne gerichtet ist. Mit Hinterkante wird die Seitenkante bezeichnet, welche in Fahrtrichtung nach hinten gerichtet ist.

Die Erfindung ist eine beheizbare Verbundscheibe mit einem kapazitiven Schaltbereich, mindestens umfassend:
- ein Substrat und eine Deckscheibe und
- mindestens eine Zwischenschicht, die flächig zwischen dem Substrat und der Deckscheibe angeordnet ist,
- mehrere Heizdrähte und mindestens zwei Stromsammelleiter, die zwischen der Deckscheibe und der Zwischenschicht angeordnet sind, wobei die Heizdrähte mit den Stromsammelleitern derart elektrisch leitend verbunden ist, dass bei Anlegen einer elektrischen Spannung an die Stromsammelleiter ein Heizstrom durch die Heizdrähte fließen kann, wodurch die Heizdrähte beheizbar sind,
   wobei
- zwischen dem Substrat und der Zwischenschicht oder
   zwischen der Deckscheibe und der Zwischenschicht
   ein elektrisch leitfähiger Kontaktdraht angeordnet ist,
- mindestens ein Bereich des elektrisch leitfähigen Kontaktdrahts einen kapazitiven Schaltbereich bildet,
- der kapazitive Schaltbereich mindestens einen Berührungsbereich und einen Anschlussbereich aufweist, der Berührungsbereich mit dem Anschlussbereich elektrisch verbunden ist und der Anschlussbereich mit einer Sensorelektronik elektrisch verbindbar ist,
- der Kontaktdraht ein frei mündendes Ende aufweist,
- der Kontaktdraht keinen direkten Berührungskontakt zu den Heizdrähten hat,
- der Kontaktdraht an genau einem Anschlussbereich mit einem der beiden Stromsammelleiter galvanisch verbunden ist,
- sich der Kontaktdraht zumindest in der Projektion senkrecht zu einer Scheibenfläche, zwischen zwei unmittelbar angrenzenden Heizdrähten befindet, wobei sich die Heizdrähte jeweils durchgehend von dem einen Stromsammelleiter zu dem anderen Stromsammelleiter erstrecken.

Hierbei ist der Kontaktdraht von den Heizdrähten verschieden.

Die Verbundscheibe umfasst mindestens ein Substrat und eine Deckscheibe. Substrat und Deckscheibe sind über eine Zwischenschicht, bevorzugt eine thermoplastische Zwischenschicht, miteinander verbunden. Dient die Verbundscheibe zur Abgrenzung eines Innenraumes von einer äußeren Umgebung, beispielsweise eines Fahrzeugs, so kann entweder das Substrat oder die Deckscheibe in Einbaulage dem Innenraum zugewandt sein.

In der Verbundscheibe sind die Heizdrähte in die Oberfläche der Zwischenschicht eingebettet. Die Heizdrähte verlaufen zwischen einem ersten Stromsammelleiter und einem zweiten Stromsammelleiter und sind an ihren Enden jeweils mit einem der Stromsammelleiter elektrisch leitend verbunden. Die Stromsammelleiter sind dafür vorgesehen mit einer externen Spannungsquelle elektrisch leitend und insbesondere galvanisch verbunden zu werden, so dass ein Strom zwischen den Stromsammelleitern durch die Heizdrähte fließt. Der Strom kann die Heizdrähte und somit die gesamte Verbundscheibe erwärmen. Die Verbundscheibe kann so bequem enteist oder von Feuchtigkeitsbeschlag befreit werden.

In einer vorteilhaften Ausgestaltung beträgt der maximale Abstand der Stromsammelleiter von derjenigen Seitenkante, entlang derer sie angeordnet sind, kleiner 3 cm, bevorzugt kleiner 2,5 cm, besonders bevorzugt kleiner 2 cm. Der maximale Abstand im Sinne der Erfindung wird zwischen der Seitenkante der Verbundscheibe und der von ihr abgewandten Kante der Stromsammelleiter gemessen. Im Beispiel einer Seitenscheibe ist dieser Abstand ausreichend gering, so dass die Stromsammelleiter mit der elektrischen Kontaktierung in einem Bereich angeordnet sind, der durch Karosserieteile und Dichtlippen typischer Kraftfahrzeug-Seitenfenster abgedeckt ist.

Die Stromsammelleiter dürfen aber auch nicht zu dicht an der Seitenkante positioniert sein, weil sonst die Verbindung der Scheiben gestört wird und Luft über die Seitenkante in den Verbund eindringen kann. In einer vorteilhaften Ausgestaltung beträgt der minimale Abstand der Stromsammelleiter von derjenigen Seitenkante, entlang derer sie angeordnet sind, größer 3 mm, bevorzugt größer 5 mm. Damit werden gute Ergebnisse erzielt. Der minimale Abstand im Sinne der Erfindung wird zwischen der Seitenkante der Verbundscheibe und der ihr zugewandten Kante der Stromsammelleiter gemessen.

Die erfindungsgemäße Verbundscheibe weist mehrere Heizdrähte auf, welche zwischen den Stromsammelleitern verlaufen. Durch die Stromsammelleiter werden sämtliche Heizdrähte mit Strom versorgt, wofür dann nur der Anschluss zweier Verbindungskabel zur externen Spannungsversorgung nötig ist.

In einer bevorzugten Ausgestaltung sind ein Stromsammelleiter entlang einer der Seitenkanten und der andere Stromsammelleiter entlang der gegenüberliegenden Seitenkante angeordnet. Im Beispiel einer Seitenscheibe wäre die eine Seitenkante beispielsweise die Vorderkante und die gegenüberliegende Seitenkante die Hinterkante. So werden die zur Verfügung stehenden, nicht sichtbaren Bereiche der Seitenscheibe optimal genutzt.

Auf diese Art und Weise können die Heizdrähte ohne starke Krümmungen und Schleifen von der einen Seitenkante (Vorderkante) zur gegenüberliegenden Seitenkante (Hinterkante) geführt werden, was ästhetisch ansprechend ist, eine homogene Verteilung der Heizleistung erleichtert und die Gefahr von lokaler Überhitzung verringert.

Die Heizdrähte können in einer bevorzugten Ausführung ohne starke Krümmungen von dem ersten Stromsammelleiter zum zweiten Stromsammelleiter verlaufen. Aufgrund der komplexen Form von Verbundscheiben und insbesondere von Seitenscheiben, wird typischerweise zumindest ein Teil der Heizdrähte nicht vollkommen geradlinig zwischen den Stromsammelleitern verlaufen, um die Heizwirkung möglichst homogen über die gesamte Scheibe zu verteilen. So werden beispielsweise die Heizdrähte nahe der typischerweise gekrümmten Oberkante eine leichte, an die Oberkante angepasste Krümmung aufweisen.

Alternativ können die Heizdrähte aber auch einen mäanderförmigen Verlauf aufweisen. Dabei verläuft ein Heizdraht ausgehend von dem ersten Stromsammelleiter in die Nähe des zweiten Stromsammelleiters. Dort verläuft der Heizdraht in der Art einer Kehrschleife ("U-Turn") ohne den zweiten Stromsammelleiter elektrisch zu kontaktieren und verläuft zurück in die Nähe des ersten Stromsammelleiters. Dort verläuft der Heizdraht abermals in der Art einer Kehrschleife ohne den ersten Stromsammelleiter elektrisch zu kontaktieren und verläuft wieder zum zweiten Stromsammelleiter. Der Heizdraht kontaktiert entweder an dieser Stelle den zweiten Stromsammelleiter oder verläuft ein weiteres Mal oder mehrere weitere Male mäanderartig zwischen den Stromsammelleitern hin und her, bevor er den zweiten Stromsammelleiter kontaktiert. Der Vorteil einer solchen mäanderartigen Führung der Heizdrähte liegt in der Verlängerung des Heizdrahtes im Vergleich mit einer direkten Verbindung der Stromsammelleiter. Durch diese Verlängerung kann die Heizleistung reduziert werden, wenn sie bei einer gegebenen angelegten elektrischen Spannung und gegebener Dicke und Material der Heizdrähte bei direkter Verbindung der Stromsammelleiter höher als gewünscht wäre.

In einer alternativen bevorzugten Ausgestaltung sind beide Stromsammelleiter entlang derselben Seitenkante der Verbundscheibe angeordnet. Die Heizdrähte verlaufen dann schleifenartig oder mäanderförmig ausgehend von dem ersten Stromsammelleiter über die Scheibe zum zweiten Stromsammelleiter. In einer besonders bevorzugten Ausführung sind die beiden Stromsammelleiter in Durchsicht durch die Verbundscheibe überlappend, insbesondere kongruent angeordnet. Um einen Kurzschluss zu vermeiden, sind die beiden Stromsammelleiter dabei bevorzugt auf unterschiedlichen Seiten der thermoplastischen Zwischenschicht angeordnet. Der Heizdraht muss dann einmal durch die thermoplastische Zwischenschicht hindurch geführt werden.

Alternativ können die beiden Stromsammelleiter auch entlang derselben Seitenkante angeordnet sein und dennoch auf derselben Seite der thermoplastischen Zwischenschicht angeordnet sein. Die Stromsammelleiter können dabei überlappend, kongruent oder auch nebeneinander angeordnet sein.

Im Allgemeinen kann ein Kurzschluss zwischen überlappenden Stromsammelleitern oder ein unerwünschter Kontakt eines Heizdrahts, eines Kontaktdrahts oder eines Umgebungskontaktdrahts, Zuleitungen oder Stromsammelleitern untereinander durch geeignete Isolierungsmaßnahmen verhindert werden. Eine solche Isolierungsmaßnahme ist beispielsweise das Anbringen einer elektrisch isolierenden Folie, die bevorzugt Polyimid (PI) und/oder Polyisobutylen (PIB) enthält und eine Dicke von 10 µm bis 200 µm aufweist.

In einer bevorzugten Ausgestaltung sind die Stromsammelleiter als Streifen einer elektrisch leitfähigen Folie ausgebildet. Die leitfähige Folie enthält bevorzugt Aluminium, Kupfer, verzinntes Kupfer, Gold, Silber, Zink, Wolfram und/oder Zinn oder Legierungen davon, besonders bevorzugt Kupfer.

Die Dicke der Stromsammelleiter beträgt bevorzugt von 10 µm bis 500 µm, besonders bevorzugt von 30 µm bis 200 µm, beispielsweise 50 µm oder 100 µm. Stromsammelleiter aus elektrisch leitfähigen Folien mit diesen Dicken sind technisch einfach zu realisieren und weisen eine vorteilhafte Stromtragfähigkeit auf.

Die Länge der Stromsammelleiter hängt von der Gestaltung der Verbundscheibe ab, insbesondere von der Länge der Kante, entlang derer die Stromsammelleiter angeordnet ist, und die Anzahl der zu kontaktierenden Heizdrähte, und kann vom Fachmann im Einzelfall geeignet gewählt werden. Unter der Länge der typischerweise streifenartigen Stromsammelleiter wird ihre längere Dimension verstanden, entlang derer sie üblicherweise mit den verschiedenen Heizdrähten oder Heizdrahtabschnitten kontaktiert sind.

Die Breite der Stromsammelleiter beträgt bevorzugt von 2 mm bis 20 mm, besonders bevorzugt von 5 mm bis 10 mm. Damit werden gute Ergebnisse erzielt hinsichtlich der Heizleistung, aber auch der optischen Unauffälligkeit.

Die Stromsammelleiter können direkt oder beispielsweise über eine Lotmasse oder einen elektrisch leitfähigen Kleber mit den Heizdrähten elektrisch leitend verbunden sein.

In einer bevorzugten Ausgestaltung der Erfindung erfolgt der Anschluss der Verbindungskabel zur externen Spannungsversorgung im Bereich einer der Seitenkanten, im Beispiel einer Seitenscheibe eines Fahrzeugs vorzugsweise im Bereich der Unterkante. Dadurch können die Verbindungskabel in der Fahrzeugkarosserie verborgen werden. Die Verbundscheibe weist dazu bevorzugt zumindest eine Zuleitung auf, welche mit einem Stromsammelleiter elektrisch kontaktiert ist und ausgehend von dem Stromsammelleiter zur Unterkante verläuft. Bevorzugt ist jeder Stromsammelleiter mit solch einer Zuleitung versehen. Die Zuleitungen können beispielsweise in Form einer geraden Strecke zur Unterkante verlaufen, um dort (beispielsweise im Bereich der Projektion der Stromsammelleiter auf die Unterkante) kontaktiert zu werden. Die Zuleitungen können bereits innerhalb des Laminats, also vor Erreichen der Unterkante enden und mit einem Flachleiter kontaktiert sein. Alternativ können sich die Zuleitungen über die Unterkante hinaus erstrecken zur Kontaktierung mit den externen Verbindungskabeln außerhalb des Laminats.

Die Zuleitung in der Verbundscheibe ist bevorzugt als Streifen einer elektrisch leitfähigen Folie ausgebildet. Die leitfähige Folie enthält bevorzugt Aluminium, Kupfer, verzinntes Kupfer, Gold, Silber, Zink, Wolfram und/oder Zinn oder Legierungen davon, besonders bevorzugt Kupfer. Die Dicke der Folie beträgt bevorzugt von 10 µm bis 500 µm, besonders bevorzugt von 30 µm bis 200 µm, beispielsweise 50 µm oder 100 µm. Die Breite der Zuleitungen beträgt bevorzugt von 2 mm bis 20 mm, besonders bevorzugt von 5 mm bis 10 mm. Vorteilhafterweise bestehen die Zuleitungen aus der gleichen Folie wie die Stromsammelleiter.

In einer bevorzugten Ausgestaltung enthalten die Heizdrähte, der Kontaktdraht und/oder der Umgebungskontaktdraht Aluminium, Kupfer, verzinntes Kupfer, Gold, Silber, Zink, Wolfram und/oder Zinn oder Legierungen davon, besonders bevorzugt Kupfer und/oder Wolfram. Das ist für die Heizleistung und das kapazitive Schaltverhalten vorteilhaft, da derartige Materialien sich auch bei zyklischer Erwärmung kaum in ihren Eigenschaften ändern.
Die Dicke der Heizdrähte, des Kontaktdraht und/oder des Umgebungskontaktdrahts beträgt bevorzugt von 10 µm bis 200 µm, besonders bevorzugt von 20 µm bis 100 µm, beispielsweise 30 µm oder 70 µm. Damit werden im Falle des Heizdrahts gute Heizwirkungen erreicht. Zudem sind solche Drähte hinreichend dünn, um optisch unauffällig zu sein.

Vorzugsweise enthalten die Heizdrähte ein Metall, bevorzugt Kupfer und/oder Wolfram, und die Dicke der Heizdrähte beträgt bevorzugt von 10 µm bis 200 µm.

In einer vorteilhaften Ausgestaltung weisen die Heizdrähte, der Kontaktdraht und/oder der Umgebungskontaktdraht eine elektrisch isolierende Ummantelung, bevorzugt aus einem Polymer wie Polyimid oder einem Polymerlack auf. Die Ummantelung ist bevorzugt farbig und besonders bevorzugt matt farbig, insbesondere schwarz oder grün. Derartige Ummantelungen vermeiden Kurzschlüsse zwischen Heizdrähten, Kontaktdraht, Umgebungskontaktdraht, Zuleitungen, Stromsammelleiter oder anderen elektrisch leitfähigen Strukturen innerhalb der Verbundscheibe. Gleichzeitig sind derartige Ummantelungen weniger Licht-reflektierend als beispielsweise blanke metallische Drähte und daher optisch wenig auffällig.

Vorzugsweise weisen die Heizdrähte eine elektrisch isolierende Ummantelung auf, bevorzugt aus einem Polymer wie einem Polymerlack.

Die Stromsammelleiter können zwischen dem kontaktierten Bereich der Heizdrähte, des Kontaktdrahtes oder des Umgebungskontaktdrahtes und der die Zwischenschicht ausbildenden thermoplastischen Folie angeordnet sein. Alternativ kann der kontaktierte Bereich der Heizdrähte, des Kontaktdrahtes oder des Umgebungskontaktdrahtes zwischen dem Stromsammelleiter und der die Zwischenschicht ausbildenden thermoplastischen Folie angeordnet sein. Anstelle eines einzelnen Stromsammelleiters können auch zwei Stromsammelleiter verwendet werden, zwischen denen der kontaktierte Bereich der Heizdrähte, des Kontaktdrahtes oder des Umgebungskontaktdrahtes sandwichartig angeordnet ist. In diesem Fall können die einzelnen Stromsammelleiter eine geringere Dicke aufweisen als bei Verwendung jeweils eines einzigen Stromsammelleiters.

In einer bevorzugten Ausgestaltung der Erfindung beträgt die Heizleistung der Verbundscheibe mindestens 250 W/m². Damit wird eine vorteilhafte Heizwirkung erzielt.

In einer vorteilhaften Ausgestaltung der erfindungsgemäßen Verbundscheibe ist der mindestens eine elektrisch leitfähige Kontaktdraht zwischen dem Substrat und der Zwischenschicht angeordnet. Der Kontaktdraht ist also durch die Zwischenschicht von den Heizdrähten und Stromsammelleitern getrennt und elektrisch isoliert. Diese Ausgestaltung hat außerdem den Vorteil, dass die Selektivität bei Berührung einer der außenseitigen Oberflächen der Verbundscheibe derart erhöht wird, dass eine Berührung des Substrats eine größere Kapazitätsänderung bewirkt als eine Berührung der Deckscheibe.

In einer alternativen vorteilhaften Ausgestaltung ist der mindestens eine elektrisch leitfähige Kontaktdraht zwischen der Deckscheibe und der Zwischenschicht angeordnet, also in der Ebene der Heizdrähte und der Stromsammelleiter. Kurzschlüsse bei sich überkreuzenden Leitungen und Drähten können durch eine geschickte Leitungsführung, durch elektrisch isolierend ummantelte Drähte oder elektrische Isolationsfolien vermieden werden.

Mindestens ein Bereich des elektrisch leitfähigen Kontaktdrahts bildet einen kapazitiven Schaltbereich. Der kapazitive Schaltbereich weist mindestens einen Berührungsbereich und einen Anschlussbereich auf, wobei der Berührungsbereich mit dem Anschlussbereich elektrisch verbunden ist. Der Berührungsbereich kann auch über einen Zuleitungsbereich mit dem Anschlussbereich elektrisch leitend verbunden sein. Der Anschlussbereich ist mit einer Sensorelektronik elektrisch verbindbar.

Der Berührungsbereich kann jede beliebige Form annehmen und den Gegebenheiten der jeweiligen Ausgestaltung angepasst sein. Der Berührungsbereich kann in einem einfachsten

Fall linear sein und gerade verlaufen. In einer vorteilhaften Ausgestaltung ist der Berührungsbereich gebogen und umschließt eine Fläche A. In einer vorteilhaften Ausgestaltung des erfindungsgemäßen Schaltbereichs hat der Berührungsbereich eine Fläche A von 1 cm² bis 200 cm², besonders bevorzugt von 1 cm² bis 9 cm². Die Länge I_{B} des Berührungsbereichs beträgt bevorzugt von von 1 cm bis 14 cm und besonders bevorzugt von 1 cm bis 3 cm. Die maximale Breite b_{B} des Berührungsbereichs beträgt bevorzugt von 1 cm bis 14 cm und besonders bevorzugt von 1 cm bis 3 cm. Der Berührungsbereich kann prinzipiell den Umriss einer beliebigen Form aufweisen. Besonders geeignete Berührungsbereiche haben kreisförmige, elliptische oder tropfenförmige Umrisse. Alternativ sind eckige Formen möglich, beispielsweise Dreiecke, Quadrate, Rechtecke, Trapeze oder anders geartete Vierecke oder Polygone höherer Ordnung.

Die Länge l_{z} des Zuleitungsbereichs beträgt bevorzugt von 1 cm bis 70 cm und besonders bevorzugt von 3 cm bis 8 cm. Die Breite b_{z} des Zuleitungsbereichs beträgt bevorzugt von 0,5 mm bis 10 mm und besonders bevorzugt von 0,5 mm bis 2 mm. Die Form des Zuleitungsbereichs ist bevorzugt streifenförmig oder linienförmig und gerade ausgebildet.

In einer vorteilhaften Ausgestaltung der erfindungsgemäßen Verbundscheibe ist der Anschlussbereich am äußeren Rand der Scheibe angeordnet. Dabei beträgt der Abstand zum äußeren Rand bevorzugt weniger als 10 cm, besonders bevorzugt weniger als 0,5 cm. Dies erlaubt es, eine elektrische Kontaktierung des Anschlussbereichs, beispielsweise mit einem Folienleiter, unter einem optisch unauffälligen Schwarzdruck oder mit einer Abdeckung, beispielsweise einem Kameragehäuse, zu kaschieren.

Der Schaltbereich ist ein kapazitiver Schaltbereich, das heißt, er ist besonders für eine kapazitive Berührungsdetektion ausgebildet. In einer vorteilhaften Ausgestaltung bildet der Schaltbereich dabei eine linienförmige Elektrode aus. In einer alternativen Ausgestaltung umschließt der Berührungsbereich des Schaltbereichs eine Fläche und bildet dadurch eine vergrößerte und flächig wirksame Elektrode. Über eine externe kapazitive Sensorelektronik wird die Kapazität der Elektrode gemessen. Die Kapazität der Elektrode ändert sich gegen Erde, wenn ein Körper (beispielsweise ein menschlicher Körper oder ein Gegenstand mit einer Dielektrizitätskonstanten, die der eines menschlichen Körpers ähnlich ist), in ihre Nähe kommt oder beispielsweise eine Isolatorschicht über der Elektrode berührt. Die Isolatorschicht umfasst insbesondere das Substrat oder die Deckscheibe selbst. Die Kapazitätsänderung wird durch die Sensorelektronik gemessen und bei Überschreiten eines Schwellwerts wird ein Schaltsignal ausgelöst. Der Schaltbereich wird durch Form und Größe der Elektrode festgelegt.

Erfindungsgemäß ist der Kontaktdraht an genau einem Anschlussbereich mit einem der Stromsammelleiter galvanisch verbunden, insbesondere mit dem Stromsammelleiter, der mit einer positiven oder negativen Betriebsspannung verbunden ist, das heißt nicht mit dem Massepotential verbunden ist. Dies bedeutet, dass der Kontaktdraht mit dem anderen Stromsammelleiter galvanisch nicht verbunden ist. In dieser Ausgestaltung, welche nicht Teil der Erfindung ist, ist die Sensorelektronik über einen ersten Eingang mit jenem Stromsammelleiter verbunden, der mit dem Kontaktdraht galvanisch verbunden ist, und über einen zweiten Eingang mit dem Massepotential verbunden.

In einer alternativen Ausgestaltung, welche nicht Teil der Erfindung ist, ist der Kontaktdraht vom Heizschaltkreis, bestehend aus dem Heizdraht, Stromsammelleitern und Zuleitungen galvanisch getrennt und über eine eigene Zuleitung mit der Sensorelektronik galvanisch verbunden. In dieser Ausgestaltung ist die Sensorelektronik über einen zweiten Eingang mit dem Massepotential verbunden.

Neben der soeben dargestellten Kapazitätsmessung gegenüber Erde, kann gemäß vorliegender Erfindung auch eine differenzielle Kapazitätsmessung zwischen dem Kontaktdraht und einem weiteren elektrisch leitfähigen Bereich gemessen werden.

Erfindungsgemäß weist der Kontaktdraht ein frei mündendes Ende auf, d.h. der Kontaktdraht endet frei.

Erfindungsgemäß hat der Kontaktdraht keinen direkten Berührungskontakt zu dem mindestens einen Heizdraht.

In einer vorteilhaften Ausgestaltung der Erfindung erstreckt sich der Kontaktdraht über mindestens 10%, vorzugsweise mindestens 20%, stärker bevorzugt mindestens 30%, noch stärker bevorzugt mindestens 40% und noch stärker bevorzugt mindestens 50% eines kürzesten Abstands zwischen den beiden Stromsammelleitern, insbesondere des kürzesten Abstands an einer Verbindungsstelle zur galvanischen Verbindung des Anschlussbereichs mit dem einen Stromsammelleiter. Vorteilhaft kann es sein, wenn sich der Kontaktdraht über mindestens 60%, vorzugsweise mindestens 70%, stärker bevorzugt mindestens 80%, noch stärker bevorzugt mindestens 90% des kürzesten Abstands zwischen den beiden Stromsammelleitern, insbesondere des kürzesten Abstands an der Verbindungsstelle zur galvanischen Verbindung des Anschlussbereichs mit dem einen Stromsammelleiter erstreckt.

Erfindungsgemäß befindet sich der Kontaktdraht, zumindest in der Projektion senkrecht zu einer Scheibenfläche (d.h. in Projektion durch die Verbundscheibe), zwischen zwei unmittelbar angrenzenden Heizdrähten, wobei sich die beiden Heizdrähte jeweils durchgehend von dem einen Stromsammelleiter zu dem anderen Stromsammelleiter erstrecken, insbesondere ohne hierbei direkten Berührungskontakt zu einem anderen Heizdraht zu haben oder über eine Drahtabzweigung bzw. Drahtzuführung eines anderen Heizdrahts zu verfügen. Insbesondere sind die beiden Heizdrähte nicht in Form eines Netzes bzw. Maschenform ausgebildet. Der Kontaktdraht und der mindestens eine Heizdraht können sich auf derselben Seite der Zwischenschicht oder auf verschiedenen Seiten der Zwischenschicht befinden.

Eine alternative erfindungsgemäße Verbundscheibe, welche nicht Teil der Erfindung ist, weist mindestens einen Umgebungskontaktdraht auf, der bevorzugt in unmittelbarer Nähe des Kontaktdrahts angeordnet ist. Der Umgebungskontaktdraht ist bevorzugt so ausgebildet, dass er in der Projektion durch die Verbundscheibe den Berührungsbereich des Kontaktdrahts umgibt und insbesondere vollständig umrandet. Der Umgebungskontaktdraht ist über einen weiteren Anschlussbereich mit der Sensorelektronik verbindbar. Das heißt, die Verbundscheibe wird mit vier Verbindungsleitungen kontaktiert: eine Verbindungsleitung für den Kontaktdraht mit dem kapazitiven Schaltbereich, eine Verbindungsleitung für den Umgebungskontaktdraht und zwei Verbindungsleitungen für die Stromsammelleiter zur elektrischen Beheizung des Heizdrahts.

In einer solchen Anordnung bilden der kapazitive Schaltbereich und der Umgebungskontaktdraht zwei Elektroden aus, die kapazitiv miteinander gekoppelt sind. Die Kapazität des von den Elektroden gebildeten Kondensators ändert sich bei Annäherung eines Körpers, beispielsweise eines menschlichen Körperteils. Die Kapazitätsänderung wird durch die Sensorelektronik gemessen und bei Überschreiten eines Schwellwerts wird ein Schaltsignal ausgelöst. Der sensitive Bereich wird durch Form und Größe des Bereichs, in denen die Elektroden kapazitiv gekoppelt sind, festgelegt.

In einer alternativen Ausgestaltung, welche nicht Teil der Erfindung ist, ist der Heizschaltkreis, also der Schaltkreis aus Heizdraht und Stromsammelleitern sowie gegebenenfalls Zuleitungen, als zweite Elektrode mit der Sensorelektronik verbunden. Der Kontaktdraht ist dabei galvanisch vom Heizschaltkreis getrennt. Das heißt, der Heizdraht und die Stromsammelleiter wirken als Umgebungsbereich oder zweite Elektrode. In diesem Fall kann die elektrische Verbindung dieser zweiten Elektrode zur Sensorelektronik auch außerhalb der Verbundscheibe erfolgen, beispielsweise im Bereich einer der Zuleitungen oder der Verbindungskabel, mit denen die Stromsammelleiter mit der Betriebsspannung für die Heizfunktion verbunden sind, insbesondere mit der Masseleitung. Dadurch entfällt eine getrennte Zuleitung zum Umgebungsbereich und die gesamte Verbundscheibe wird nur noch mit drei Verbindungsleitungen kontaktiert: eine Verbindungsleitung für den Kontaktdraht mit dem kapazitiven Schaltbereich und zwei Verbindungsleitungen für die Stromsammelleiter, wobei eine der Verbindungsleitungen für die Stromsammelleiter als elektrische Leitungsverbindung zum zweiten Eingang der Sensorelektronik dient.

Der erfindungsgemäße kapazitive Schaltbereich und gegebenenfalls der Umgebungskontaktdraht, sowie der Heizschaltkreis sind in die erfindungsgemäße Verbundscheibe integriert. Es ist also kein Schalter oder ähnliches separates Bauteil nötig, welches an der Verbundscheibe angebracht werden muss. Die Verbundscheibe weist bevorzugt auch keine sonstigen Bauteile auf, die im Durchsichtbereich auf ihren Oberflächen angeordnet sind. Das ist besonders vorteilhaft im Hinblick auf eine dünne Bauweise der Verbundscheibe sowie eine nur geringe Störung der Durchsicht durch die Verbundscheibe.

Ein vorteilhafter Aspekt der Erfindung umfasst eine Scheibenanordnung mit einer erfindungsgemäßen Verbundscheibe und einer Sensorelektronik, die über den Anschlussbereich mit dem kapazitiven Schaltbereich und gegebenenfalls über einen weiteren Anschlussbereich mit dem Umgebungskontaktdraht oder dem Heizschaltkreis elektrisch verbunden ist. Die Sensorelektronik ist eine kapazitive Sensorelektronik.

In einer vorteilhaften Ausgestaltung der erfindungsgemäßen Schaltanordnung ist die Empfindlichkeit der Sensorelektronik so gewählt, dass die Sensorelektronik bei Berührung des Berührungsbereichs mit einem menschlichen Finger auf dem Substrat ein Schaltsignal ausgibt und bei Berührung des Berührungsbereichs auf der Deckscheibe kein Schaltsignal oder ein anderes Schaltsignal ausgibt. Es versteht sich, dass die Berührung des Berührungsbereichs auch mit mehreren Fingern oder einem anderen menschlichen Körperteil erfolgen kann. Unter Berührung wird im Rahmen dieser Erfindung jegliche Wechselwirkung mit dem Schaltbereich verstanden, die zu einer messbaren Änderung des Messsignals, also hier der Kapazität, führt. Insbesondere ist dies eine Berührung einer außenseitigen Oberfläche der Verbundscheibe in einer Zone, die sich durch orthogonale Projektion des Berührungsbereichs auf der außenseitigen Oberfläche ergibt. Je nach Empfindlichkeit der Anordnung und der Sensorelektronik kann auch schon eine Annäherung durch einen menschlichen Körper an die außenseitige Oberfläche genügen, um ein Schaltsignal auszulösen. Dabei muss die außenseitige Oberfläche selbst nicht notwendigerweise berührt werden. Der menschliche Körper muss lediglich in das durch die Kondensatoranordnung gebildete elektrische Feld gelangen und dabei eine ausreichend hohe Kapazitätsänderung bewirken.

In einer vorteilhaften Ausgestaltung der Erfindung ist der Flächenkapazitätsbelag c_{I} zwischen dem Berührungsbereich und der außenseitigen Oberfläche (IV) des Substrats größer als der Flächenkapazitätsbelag c_{A} zwischen dem Berührungsbereich und der außenseitigen Oberfläche (I) der Deckscheibe.

Der Flächenkapazitätsbelag c_{I} beziehungsweise c_{A} ist definiert als die Kapazität eines Plattenkondensators desjenigen Bereichs der Verbundscheibe, der sich durch orthogonale Projektion des Berührungsbereichs zwischen dem Berührungsbereich und der außenseitigen Oberfläche des Substrats beziehungsweise der außenseitigen Oberfläche der Deckscheibe ergibt, wobei die sich ergebende Kapazität auf die Fläche des Berührungsbereichs normiert wird. Außenseitige Oberfläche bedeutet hierbei die Oberfläche der Verbundscheibe die nach außen, also von der Verbundscheibe weg weißt. Innenseitige Oberfläche bedeutet demnach die Oberfläche des Substrats oder der Deckscheibe, die ins Innere der Verbundscheibe weist und mit einer Zwischenschicht flächig verbunden ist.

Der Flächenkapazitätsbelag ist folglich die auf die Fläche normierte Kapazität der gesamten Schichtfolgen (Belag) von dem Berührungsbereich beziehungsweise von der vom Berührungsbereich umschlossenen Fläche bis zur jeweiligen außenseitigen Oberfläche der Verbundscheibe.

In einer vorteilhaften Ausgestaltung der erfindungsgemäßen Verbundscheibe ist das Verhältnis des Flächenkapazitätsbelags c_{I} zum Flächenkapazitätsbelag c_{A} größer oder gleich 1,1:1, bevorzugt größer oder gleich 1,2:1. Für derartige Verhältnisse lässt sich eine Berührung der außenseitigen Oberfläche des Substrats bereits gut von einer Berührung der außenseitigen Oberfläche der Deckscheibe unterscheiden.

Die ausgegebenen Schaltsignale können beliebig und den Erfordernissen der jeweiligen Verwendung angepasst sein. So kann das Schaltsignal eine positive Spannung, beispielsweise 12 V, bedeuten, kein Schaltsignal beispielsweise 0 V bedeuten und ein anderes Schaltsignal beispielweise + 6 bedeuten. Die Schaltsignale können auch den bei einem CAN-Bus üblichen Spannungen CAN_High und CAN_Low entsprechen und um einen dazwischen liegenden Spannungswert wechseln. Das Schaltsignal kann auch gepulst und/oder digital codiert sein.

Die Empfindlichkeit der Sensorelektronik kann in Abhängigkeit der Größe des Berührungsbereichs und in Abhängigkeit der Dicke von Substrat, Zwischenschichten und Deckscheibe im Rahmen einfacher Experimente ermittelt werden.

Der besondere Vorteil einer solchen erfindungsgemäßen Scheibenanordnung liegt darin, dass das Schaltsignal nur bei Berührung der Verbundscheibe von einer der beiden außenseitigen Oberflächen ausgelöst werden kann. Bei einer Verwendung der Scheibenanordnung in einer Fahrzeugscheibe und Einbau der Verbundscheibe mit der Substratseite in Richtung des Fahrzeuginnenraums, kann beispielsweise ein Auslösen des Schaltvorgangs durch Personen von außen oder ein ungewolltes Auslösen des Schaltvorgangs durch Regen oder die Bewegung des Scheibenwischers sicher vermieden werden, ohne den generell üblichen Scheibenaufbau für Verbundsicherheitsglas grundlegend zu verändern. Dies war für den Fachmann unerwartet und überraschend.

In Kombination mit der soeben beschriebenen Scheibenanordnung oder alternativ dazu, kann die Empfindlichkeit der Sensorelektronik so gewählt werden, dass sie bei Berührung des Berührungsbereichs auf dem Substrat und/oder der Deckscheibe mit einem menschlichen Finger ein Schaltsignal ausgibt und bei Berührung des Zuleitungsbereichs auf dem Substrat und/oder der Deckscheibe kein Schaltsignal oder ein anderes Schaltsignal ausgibt.

Die Empfindlichkeit der Sensorelektronik kann in Abhängigkeit der Größe des Berührungsbereichs und in Abhängigkeit der Geometrie im Rahmen einfacher Experimente ermittelt werden.

Als Substrat und Deckscheibe sind im Grunde alle elektrisch isolierenden Substrate geeignet, die unter den Bedingungen der Herstellung und der Verwendung der erfindungsgemäßen Verbundscheibe thermisch und chemisch stabil sowie dimensionsstabil sind.

Der Begriff Substrat bedeutet im Sinne der vorliegenden Erfindung ein scheibenförmiges Substrat oder eine Substratscheibe.

Das Substrat und/oder die Deckscheibe enthalten bevorzugt Glas, besonders bevorzugt Flachglas, Floatglas, Quarzglas, Borosilikatglas, Kalk-Natron-Glas, oder klare Kunststoffe, vorzugsweise starre klare Kunststoffe, insbesondere Polyethylen, Polypropylen, Polycarbonat, Polymethylmethacrylat, Polystyrol, Polyamid, Polyester, Polyvinylchlorid und/oder Gemische davon. Das Substrat und/oder die Deckscheibe sind bevorzugt transparent, insbesondere für die Verwendung der Scheibe als Seitenscheibe, Windschutzscheibe oder Rückscheibe eines Fahrzeugs oder anderen Verwendungen bei denen eine hohe Lichttransmission erwünscht ist. Als transparent im Sinne der Erfindung wird eine Scheibe verstanden, die eine Transmission im sichtbaren Spektralbereich von größer als 70 % aufweist. Für Scheiben, die nicht im verkehrsrelevanten Sichtfeld des Fahrers liegen, beispielsweise für Dachscheiben, kann die Transmission aber auch viel geringer sein, beispielsweise größer als 5 %.

Die Dicke von Substrat(scheibe) und/oder Deckscheibe kann breit variieren und so hervorragend den Erfordernissen des Einzelfalls angepasst werden. Vorzugsweise werden Standardstärken von 1,0 mm bis 25 mm, bevorzugt von 1,4 mm bis 2,5 mm für Fahrzeugglas und bevorzugt von 4 mm bis 25 mm für Möbel, Geräte und Gebäude, insbesondere für elektrische Heizkörper, verwendet. Die Größe der Scheibe kann breit variieren und richtet sich nach der Größe der erfindungsgemäßen Verwendung. Das Substrat und gegebenenfalls die Deckscheibe weisen beispielsweise im Fahrzeugbau und Architekturbereich übliche Flächen von 200 cm² bis zu 20 m² auf.

Die Verbundscheibe kann eine beliebige dreidimensionale Form aufweisen. Vorzugsweise hat die dreidimensionale Form keine Schattenzonen, so dass sie beispielsweise durch Kathodenzerstäubung beschichtet werden kann. Bevorzugt sind die Substrate planar oder leicht oder stark in einer Richtung oder in mehreren Richtungen des Raumes gebogen. Insbesondere werden planare Substrate verwendet. Substrat und Deckscheibe können farblos oder gefärbt sein.

Das Substrat und/oder die Deckscheibe weisen bevorzugt eine relative Permittivität ε_{r,1/4} von 2 bis 8 und besonders bevorzugt von 6 bis 8 auf. Bei derartigen relativen Permittivitäten konnte eine besonders gute Unterscheidung zwischen einer Berührung der Berührungsfläche über die außenseitige Oberfläche des Substrats von gegenüber der außenseitigen Oberfläche der Deckscheibe erzielt werden.

Substrate und/oder Deckscheiben werden durch mindestens eine Zwischenschicht miteinander verbunden. Die Zwischenschicht ist bevorzugt transparent. Die Zwischenschicht enthält vorzugsweise mindestens einen Kunststoff, bevorzugt Polyvinylbutyral (PVB), Ethylenvinylacetat (EVA) und / oder Polyethylenterephthalat (PET). Die Zwischenschicht kann aber auch beispielsweise Polyurethan (PU), Polypropylen (PP), Polyacrylat, Polyethylen (PE), Polycarbonat (PC), Polymethylmetacrylat, Polyvinylchlorid, Polyacetatharz, Gießharze, Acrylate, fluorinierte Ethylen-Propylene, Polyvinylfluorid und/oder Ethylen-Tetrafluorethylen, oder Copolymere oder Gemische davon enthalten. Die Zwischenschicht kann durch eine oder auch durch mehrere übereinander angeordnete Folien ausgebildet werden, wobei die Dicke einer Folie bevorzugt von 0,025 mm bis 1 mm beträgt, typischerweise 0,38 mm oder 0,76 mm. Das heißt die Zwischenschicht kann aus einer oder aus mehreren Folien aufgebaut sein. Die Zwischenschicht kann bevorzugt thermoplastisch sein und nach der Lamination das Substrat, die Deckscheibe und eventuelle weitere Zwischenschichten miteinander verkleben. In einer besonders vorteilhaften Ausgestaltung der erfindungsgemäßen Verbundscheibe ist die Zwischenschicht als Klebeschicht aus einem Klebstoff ausgebildet, mit der die Trägerfolie auf dem Substrat aufgeklebt ist. In diesem Fall hat die Zwischenschicht bevorzugt die Abmessungen der Trägerfolie.

Die Zwischenschicht hat bevorzugt eine relative Permittivität von 2 bis 4 und besonders bevorzugt von 2,1 bis 2,9. Bei derartigen relativen Permittivitäten konnte eine besonders gute Unterscheidung zwischen einer Berührung der Berührungsfläche über die außenseitige Oberfläche des Substrats von gegenüber der außenseitigen Oberfläche der Deckscheibe erzielt werden.

Die Begriffe "Substrat" und "Deckscheibe" sind zur Unterscheidung der beiden Scheiben bei einer erfindungsgemäßen Verbundscheibe gewählt. Mit den Begriffen ist keine Aussage über die geometrische Anordnung verbunden. Ist die erfindungsgemäße Verbundscheibe beispielsweise dafür vorgesehen, in einer Öffnung, beispielsweise eines Fahrzeugs oder eines Gebäudes, den Innenraum gegenüber der äußeren Umgebung abzutrennen, so kann das Substrat dem Innenraum oder der äußeren Umgebung zugewandt sein.

Die elektrische Zuleitung für den Kontaktdraht und/oder den Umgebungskontaktdraht ist bevorzugt als Folienleiter oder flexibler Folienleiter (Flachleiter, Flachbandleiter) ausgebildet. Unter Folienleiter wird ein elektrischer Leiter verstanden, dessen Breite deutlich größer ist als seine Dicke. Ein solcher Folienleiter ist beispielsweise ein Streifen oder Band enthaltend oder bestehend aus Kupfer, verzinntem Kupfer, Aluminium, Silber, Gold oder Legierungen davon. Der Folienleiter weist beispielsweise eine Breite von 2 mm bis 16 mm und eine Dicke von 0,03 mm bis 0,1 mm auf. Der Folienleiter kann eine isolierende, bevorzugt polymere Ummantelung, beispielsweise auf Polyimid-Basis aufweisen. Folienleiter, die sich zur Kontaktierung von elektrisch leitfähigen Beschichtungen in Scheiben eignen, weisen lediglich eine Gesamtdicke von beispielsweise 0,3 mm auf. Derart dünne Folienleiter können ohne Schwierigkeiten zwischen den einzelnen Scheiben in der thermoplastischen Zwischenschicht eingebettet werden. In einem Folienleiterband können sich mehrere voneinander elektrisch isolierte, leitfähige Schichten befinden.

Alternativ können auch dünne Metalldrähte als elektrische Zuleitung verwendet werden. Die Metalldrähte enthalten insbesondere Kupfer, Wolfram, Gold, Silber oder Aluminium oder Legierungen mindestens zweier dieser Metalle. Die Legierungen können auch Molybdän, Rhenium, Osmium, Iridium, Palladium oder Platin enthalten.

Die elektrische Leitungsverbindung zwischen dem Anschlussbereich des Kontaktdrahts und/oder des Umgebungskontaktdrahts und der elektrischen Zuleitung erfolgt bevorzugt über elektrisch leitfähige Kleber, die eine sichere und dauerhaft elektrische Leitungsverbindung zwischen Anschlussbereich und Zuleitung ermöglichten. Alternativ kann die elektrische Leitungsverbindung auch durch Klemmen erfolgen, da die Klemmverbindung durch den Laminiervorgang verrutschungssicher fixiert wird. Alternativ kann die Zuleitung auch auf den Anschlussbereich aufgedruckt werden, beispielsweise mittels einer metallhaltigen und insbesondere silberhaltigen, elektrisch leitfähigen Druckpaste. Alternativ kann die elektrische Leitungsverbindung gelötet sein.

In einer vorteilhaften Ausgestaltung der Erfindung weist die erfindungsgemäße Verbundscheibe ein Lichteinstrahlmittel und ein Lichtablenkmittel auf. Lichteinstrahlmittel und Lichtablenkmittel sind dabei in oder am Substrat und/oder an der Deckscheibe oder der Zwischenschicht angeordnet.

Das Lichteinstrahlmittel umfasst erfindungsgemäß zumindest eine Lichtquelle, bevorzugt eine LED oder OLED. Der besondere Vorteil liegt in den kleinen Abmessungen und der geringen Leistungsaufnahme. Der von der Lichtquelle emittierte Wellenlängenbereich kann im Bereich des sichtbaren Lichtes frei gewählt werden, beispielsweise nach praktischen oder ästhetischen Gesichtspunkten. Das Lichteinstrahlmittel kann optische Elemente umfassen, insbesondere zur Lenkung des Lichts, bevorzugt einen Reflektor und/oder einen Lichtwellenleiter, beispielsweise eine Glasfaser oder eine polymere optische Faser. Das Lichteinstrahlmittel kann an einer beliebigen Stelle des Substrats oder der Deckscheibe angeordnet sein, insbesondere am Seitenrand des Substrats oder der Deckscheibe oder in einer kleinen Ausnehmung inmitten von Substrat oder Deckscheibe.

Das Lichtablenkmittel umfasst bevorzugt Partikel, Punktraster, Aufkleber, Anlagerungen, Einkerbungen, Einritzungen, Strichraster, Aufdrucke und/oder Siebdrucke und ist dazu geeignet, das im Substrat oder in der Deckscheibe transportierte Licht aus demselben auszukoppeln.

Das Lichtablenkmittel kann an jeder beliebigen Position auf der Ebene des Substrats oder der Deckscheibe angeordnet sein. Besonders vorteilhaft ist es, wenn das Lichtablenkmittel im Bereich oder in der unmittelbaren Umgebung des Berührungsbereichs angeordnet ist und so ein schnelles Auffinden des ansonsten kaum sichtbaren Berührungsbereichs ermöglicht. Dies ist insbesondere bei Nacht oder Dunkelheit besonders vorteilhaft.

Alternativ kann Licht durch einen Lichtleiter, der auf dem Substrat, der Zwischenschicht oder der Deckscheibe angeordnet ist, an den Berührungsbereich herangeführt werden und diesen markieren.

Alternativ oder in Kombination kann das Lichteinstrahlmittel zusammen mit dem Lichtablenkmittel eine Information auf der Scheibe visualisieren, beispielsweise den Schaltzustand des kapazitiven Schaltbereichs wiedergeben oder anzeigen, ob beispielsweise eine elektrische Funktion eingeschaltet oder ausgeschaltet ist.

In einer alternativen vorteilhaften Ausgestaltung der erfindungsgemäßen Verbundscheibe ist der Berührungsbereich durch eine aktive Lichtquelle direkt markierbar oder markiert, bevorzugt durch eine Leuchtdiode (LED), eine organische Leuchtdiode (OLED), eine Glühbirne oder andere aktive Leuchtkörper, wie ein lumineszentes Material, bevorzugt ein fluoreszierendes oder phosphoreszierendes Material.

In einer weiteren alternativen vorteilhaften Ausgestaltung der erfindungsgemäßen Verbundscheibe ist der Berührungsbereich durch einen farbigen, bevorzugt einen weißen oder schwarzen, Aufdruck, beispielsweise einem Siebdruck, auf dem transparenten Substrat, der Zwischenschicht oder der Deckscheibe markiert. Dies hat den besonderen Vorteil, dass der Berührungsbereich unabhängig von einer Spannungsquelle und dauerhaft markiert ist. Der Aufdruck kann auch ein lumineszentes Material, bevorzugt ein fluoreszierendes oder phosphoreszierendes Material enthalten und/oder nachleuchtend sein.

Die erfindungsgemäße Verbundscheibe kann neben der durch die Heizdrähte bewirkten Heizfunktion weitere Funktionalitäten aufweisen. In einer vorteilhaften Ausgestaltung weist die Verbundscheibe eine reflektierende Beschichtung für den Infrarotbereich auf. Eine solche Beschichtung kann auf eine Oberfläche der Außenscheibe oder Innenscheibe aufgebracht sein, bevorzugt auf einer zur Zwischenschicht hingewandten Oberfläche, um die Beschichtung vor Korrosion und mechanischer Einwirkung zu schützen. Alternativ kann die Beschichtung in Form einer beschichteten thermoplastischen Folie, beispielsweise aus Polyethylenterephthalat (PET), in den Verbund eingebracht sein. In diesem Fall ist die beschichtete Folie bevorzugt zwischen einer ersten und einer zweiten thermoplastischen Verbindungsfolie angeordnet. IR-reflektierende Beschichtungen weisen typischerweise zumindest eine elektrisch leitfähige Schicht auf. Die Beschichtung kann zusätzlich dielektrische Schichten aufweisen, die beispielsweise zur Regulierung des Schichtwiderstands, zum Korrosionsschutz oder zur Verminderung der Reflexion dienen. Die leitfähige Schicht enthält bevorzugt Silber oder ein elektrisch leitfähiges Oxid (transparent conductive oxide, TCO) wie Indium-Zinn-Oxid (indium tin oxide, ITO). Die leitfähige Schicht weist bevorzugt eine Dicke von 10 nm bis 200 nm auf. Zur Verbesserung der Leitfähigkeit bei gleichzeitig hoher Transparenz kann die Beschichtung mehrere elektrisch leitfähige Schichten aufweisen, welche durch zumindest eine dielektrische Schicht voneinander getrennt sind. Die leitfähige Beschichtung kann beispielsweise zwei, drei oder vier elektrisch leitfähige Schichten enthalten. Typische dielektrische Schichten enthalten Oxide oder Nitride, beispielsweise Siliziumnitrid, Siliziumoxid, Aluminiumnitrid, Aluminiumoxid, Zinkoxid oder Titanoxid. Die Beschichtung weist bevorzugt eine kleinere Fläche als die Verbundscheibe auf, so dass ein umlaufender Randbereich mit einer Breite von bevorzugt 0,5 mm bis 10 mm nicht mit der Beschichtung versehen ist. Die leitfähige Beschichtung ist dadurch innerhalb der Zwischenschicht vor Kontakt mit der umgebenden Atmosphäre geschützt, was im Hinblick auf die Vermeidung von Korrosion vorteilhaft ist. Die so ausgestaltete Verbundscheibe kann auch weitere unbeschichtete Bereiche enthalten, beispielsweise Datentransmissionsfenster oder Kommunikationsfenster.

Derartige flächenhaft ausgebildete, elektrisch leitfähige Beschichtungen können vorteilhafterweise zur Erhöhung der Asymmetrie des erfindungsgemäßen Schaltverhaltens verwendet werden. Dazu wird bevorzugt die elektrisch leitfähige Beschichtung in einer Ebene angeordnet, die vom Berührungsbereich aus gesehen, von der außenseitigen Oberfläche, über die geschaltet werden soll, abgewandt ist.

In einer vorteilhaften Ausgestaltung der Verbundscheibe, insbesondere als Seitenscheibe, ist in der Nähe einer Seitenkante, insbesondere der Oberkante der Seitenscheibe, mindestens ein Kontaktdraht angeordnet. Der Abstand des Berührbereichs des Kontaktdrahts zur unmittelbar benachbarten Seitenkante beträgt weniger als 2 cm, bevorzugt weniger als 1 cm. Der kapazitive Schaltbereich des Kontaktdrahts kann beispielsweise als Berührungssensor einer verfahrbaren Verbundscheibe dienen und derart mit dem Verfahrmechanismus verschaltet sein, dass bei Auslösen eines Schaltsignals das Verfahren der Verbundscheibe gestoppt wird. Dies ist insbesondere bei einer Seitenscheibe vorteilhaft, um das Einklemmen eines Körperteils zwischen einer sich schließenden Seitenscheibe und einem feststehenden Fensterrahmen zu verhindern. Der kapazitive Schaltbereich dient dann als Anti-Pinch-Sensor.

Die Erfindung umfasst weiter ein Verfahren zur Herstellung einer erfindungsgemäßen Verbundscheibe, mindestens umfassend
(a) Zurechtschneiden einer Zwischenschicht,
(b) Aufbringen von zwei Stromsammelleitern und mehrerer Heizdrähte auf eine Oberfläche der Zwischenschicht, wobei der Heizdraht mit beiden Stromsammelleitern elektrisch leitend verbunden wird, und
   Aufbringen mindestens eines Kontaktdrahtes auf die Oberfläche der Zwischenschicht,
(c) Herstellen einer Stapelfolge aus einem Substrat, der Zwischenschicht mit dem Heizdraht, den Stromsammelleitern und dem Kontaktdraht, und einer Deckscheibe, und
(d) Laminieren der Stapelfolge zu einer Verbundscheibe.

Die Zwischenschicht wird in Form zumindest einer Folie bereitgestellt.

Die Stromsammelleiter, der Heizdraht und der Kontaktdraht werden bevorzugt beim oder vor dem Aufbringen auf die Zwischenschicht zumindest bereichsweise erwärmt.

Das Anbringen der Stromsammelleiter kann insbesondere durch Auflegen erfolgen, aber auch durch Aufkleben. Das Erwärmen der Stromsammelleiter erfolgt beispielsweise mit einem Lötkolben. Durch das Erwärmen soll die thermoplastische Zwischenschicht leicht angeschmolzen und so mit dem Stromsammelleiter verbunden werden. Die Temperatur beträgt bevorzugt von 150 °C bis 240 °C.

Statt der Verwendung eines Lötkolbens ist es auch möglich, die Stromsammelleiter mit einem Plotter und einem beheizbaren Rad auf die Zwischenschicht aufzubringen oder in deren Oberfläche einzubetten.

Sollen die Heizdrähte zwischen zwei Stromsammelleiter sandwichartig angeordnet werden, so wird der obere Stromsammelleiter (also derjenige, der beim Auflegen auf die Zwischenschicht einen größeren Abstand zur Zwischenschicht aufweist) bevorzugt mit einer höheren Temperatur fixiert, beispielsweise von 300 °C bis 360 °C).

Das Aufbringen der Heizdrähte, des Kontaktdrahtes und/oder des Umgebungskontaktdrahtes erfolgt bevorzugt mit einem sogenannten Plotter. Dabei werden die Heizdrähte, der Kontaktdraht oder der Umgebungskontaktdraht mit einem Roboterarm bewegt und von einer Spule abgewickelt. Die Heizdrähte, der Kontaktdraht oder der Umgebungskontaktdraht werden bevorzugt erhitzt beim Aufbringen, so dass die thermoplastische Zwischenschicht anschmilzt und sich mit den Heizdrähten, dem Kontaktdraht oder dem Umgebungskontaktdraht verbindet. Insbesondere sollen die Heizdrähte, der Kontaktdraht oder der Umgebungskontaktdraht vollständig oder teilweise in die Oberfläche der Zwischenschicht eindringen, so dass er in die Oberfläche der Zwischenschicht eingebettet ist.

Die Herstellung der Verbundscheibe durch Lamination erfolgt mit üblichen, dem Fachmann an sich bekannten Methoden, beispielsweise Autoklavverfahren, Vakuumsackverfahren, Vakuumringverfahren, Kalanderverfahren, Vakuumlaminatoren oder Kombinationen davon. Die Verbindung von Substrat und Deckscheibe dabei erfolgt üblicherweise unter Einwirkung von Hitze, Vakuum und / oder Druck.

Ein weiterer Aspekt der Erfindung umfasst die Verwendung der erfindungsgemäßen Verbundscheibe bevorzugt als eine Fahrzeugscheibe in Fortbewegungsmitteln für den Verkehr auf dem Lande, in der Luft oder zu Wasser, insbesondere in Kraftfahrzeugen, wie eine Seitenscheibe, eine Windschutzscheibe, eine Heckscheibe oder eine Dachscheibe. Die erfindungsgemäße Verbundscheibe wird besonders bevorzugt als eine Seitenscheibe für ein öffenbares Seitenfenster eines Fahrzeugs verwendet. Darunter wird ein Seitenfenster verstanden, welches sich durch im Wesentlichen vertikale Verschiebung der Seitenscheibe in die Karosserietür hinein öffnen und wieder schließen lässt.

Die erfindungsgemäße Verbundscheibe kann aber auch als Architekturscheibe oder Verglasung in einem Möbel, beispielsweise einem Kühlschrank, einem Gefrierschrank oder einem elektrischen Heizkörper oder Spiegelelement verwendet werden.

Im Folgenden wird die Erfindung anhand von Figuren und Ausführungsbeispielen näher erläutert. Die Figuren sind schematische Darstellungen und nicht maßstabsgetreu. Die Figuren schränken die Erfindung in keiner Weise ein.

Es zeigen:
- Figur 1A: eine Draufsicht auf eine Ausgestaltung einer erfindungsgemäßen Verbundscheibe,
- Figur 1B: einen Schnitt entlang A-A' durch die Verbundscheibe aus Figur 1A,
- Figur 1C: einen Schnitt entlang B-B' durch die Verbundscheibe aus Figur 1A,
- Figur 2A: eine Draufsicht auf eine alternative Ausgestaltung einer Verbundscheibe, welche nicht Teil der Erfindung ist,
- Figur 2B: einen Schnitt entlang A-A' durch die Verbundscheibe aus Figur 2A,
- Figur 2C: einen Schnitt entlang B-B' durch die Verbundscheibe aus Figur 2A,
- Figur 3A: eine Draufsicht auf eine weitere alternative Ausgestaltung einer Verbundscheibe, welche nicht Teil der Erfindung ist,
- Figur 3B: einen Schnitt entlang A-A' durch die Verbundscheibe aus Figur 3A,
- Figur 3C: einen Schnitt entlang B-B' durch die Verbundscheibe aus Figur 3A,
- Figur 3D: vergrößerte Darstellung eines Details aus Figur 3A,
- Figur 3E: vergrößerte Darstellung eines Details aus Figur 3A,
- Figur 4A: eine Draufsicht auf eine weitere alternative Ausgestaltung einer Verbundscheibe, welche nicht Teil der Erfindung ist,
- Figur 4B: einen Schnitt entlang A-A' durch die Verbundscheibe aus Figur 4A,
- Figur 4C: einen Schnitt entlang B-B' durch die Verbundscheibe aus Figur 4A,
- Figur 5: ein Flussdiagramm einer Ausführungsform des erfindungsgemäßen Verfahrens.

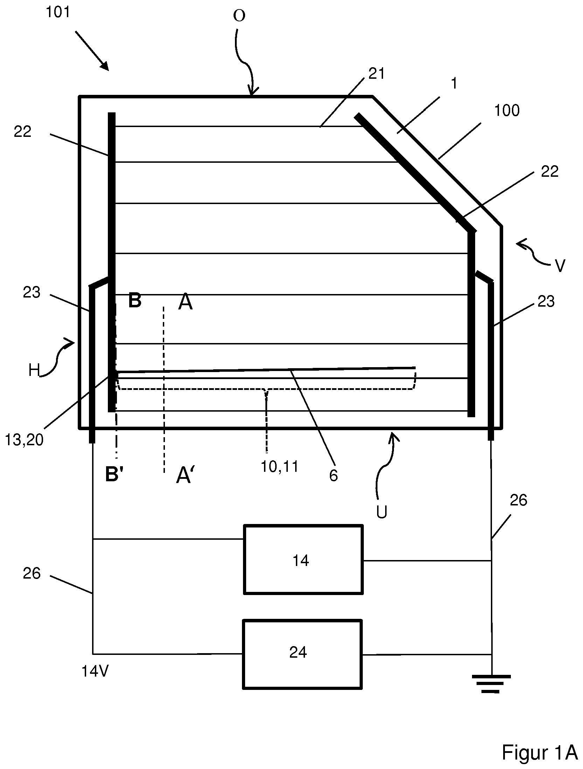

Figur 1A zeigt eine erfindungsgemäße Scheibenanordnung 101 mit einer Draufsicht auf eine Ausgestaltung einer erfindungsgemäßen Verbundscheibe 100. Die erfindungsgemäße Verbundscheibe 100 ist hier beispielsweise als Seitenscheibe eines Kraftfahrzeugs ausgebildet. Die Seitenscheibe ist für das Seitenfenster eines Personenkraftwagens vorgesehen, welches sich durch Herunterfahren der Seitenscheibe öffnen lässt. Die Verbundscheibe 100 weist eine Vorderkante V, eine Hinterkante H, eine Oberkante O und eine Unterkante U auf. Die Kanten sind entsprechend der Einbaulage in Fahrtrichtung bezeichnet.

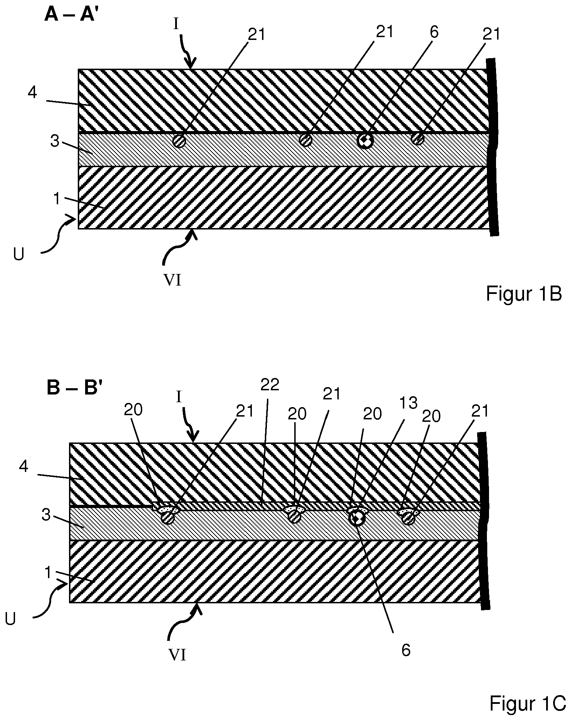

Figur 1B zeigt einen Schnitt entlang A-A' und Figur 1C einen Schnitt entlang B-B' durch die Verbundscheibe 100 aus Figur 1A.

Die Verbundscheibe 100 umfasst ein Substrat 1 und eine Deckscheibe 4, die durch eine Zwischenschicht 3 miteinander verbunden sind. Das Substrat 1 ist in diesem Beispiel die Innenscheibe der Seitenscheibe und die Deckscheibe 4 ist die Außenscheibe der Verbundscheibe 100. Die Draufsicht ist auf die außenseitige Oberfläche IV des Substrats 1 gerichtet. Substrat 1 und Deckscheibe 4 bestehen beispielsweise aus Kalk-Natron-Glas und weisen beispielsweise eine Dicke von jeweils 2,1 mm auf. Die Zwischenschicht 3 ist beispielsweise durch eine Folie aus Polyvinylbutyral (PVB) gebildet, mit einer Dicke von 0,76 mm.

In die zur Deckscheibe 4 weisende Oberfläche der Zwischenschicht 3 sind hier beispielsweise acht Heizdrähte 21 eingebettet. Die Heizdrähte 21 bestehen beispielsweise aus Kupfer oder Wolfram und weisen eine Dicke von 30 µm auf. Jeder Heizdraht 21 ist mit einem ersten Stromsammelleiter 22 (hier links dargestellt) und einem zweiten Stromsammelleiter 22 (hier rechts dargestellt) elektrisch kontaktiert. Die Stromsammelleiter 22 sind als Streifen einer Kupferfolie ausgebildet, mit einer Dicke von beispielsweise 100 µm und einer Breite von beispielsweise 7 mm. Wird an die Stromsammelleiter 22 eine Spannung angelegt, beispielsweise durch eine Spannungsquelle 25, so fließt ein Strom durch die Heizdrähte 21, wodurch die Heizwirkung entsteht. Die Spannung kann die übliche KFZ-Bordspannung von 14 V sein, oder auch eine Spannung von beispielsweise 42 V oder 48 V.

Der erste Stromsammelleiter 22 verläuft beispielsweise entlang der Hinterkante H der Seitenscheibe, der zweite Stromsammelleiter 22 verläuft beispielsweise entlang der Vorderkante V. Der erste Stromsammelleiter 22 ist bei elektrischer Beheizung beispielsweise mit einer positiven Betriebsspannung von 14 V verbunden und der zweite Stromsammelleiter 22 mit der Bezugsmasse. Der maximale Abstand der Stromsammelleiter zu der Kante, entlang derer sie verlaufen, beträgt beispielsweise 2 cm. Derartige Stromsammelleiter 22 sind auch im geöffneten Zustand des Seitenfensters für einen Betrachter nicht sichtbar. Stattdessen sind die Stromsammelleiter 22 von Karosserieteilen und Dichtlippen typischer Seitenfenster abgedeckt. Der minimale Abstand beträgt beispielsweise 6 mm. Dieser Abstand ist ausreichend, um eine Störung der Stabilität des Laminats und ein Eindringen von Luft zu verhindern.

Die Verbundscheibe 100 verfügt weiter über zwei Zuleitungen 23. Jede Zuleitung 23 ist mit einem Stromsammelleiter 22 elektrisch kontaktiert und verläuft gerade zur Unterkante U, wo sie mit einem Verbindungskabel 26 zur externen Spannungsversorgung 24 kontaktiert werden können.

Die elektrische Leitungsverbindung 20 zwischen den Heizdrähten 21 und den Stromsammelleitern 22 erfolgt beispielsweise durch Löten. Da die Heizdrähte üblicherweise eine elektrisch leitfähige Ummantelung aufweisen, wird diese Ummantelung vor oder während des Kontaktierungsvorgangs entfernt.

Des Weiteren ist zwischen der Deckscheibe 4 und der Zwischenschicht 3 ein elektrisch leitfähiger Kontaktdraht 6 angeordnet. Der Kontaktdraht 6 besteht ebenfalls aus einem Kupfer- oder Wolframdraht mit einem Durchmesser von beispielsweise 30 µm. Der Kontaktdraht 6 ist in diesem Beispiel parallel zu den Heizdrähten 21 und zwischen zwei benachbarten Heizdrähten 21 angeordnet.
Der Kontaktdraht 6 weist einen Anschlussbereich 13 auf, in dem der Kontaktdraht 6 über eine elektrische Leitungsverbindung 20 mit dem ersten Stromsammelleiter 22 elektrisch leitend verbunden ist, beispielsweise über eine Lötstelle. Der Kontaktdraht 6 weist außerhalb des Anschlussbereichs 13 einen Berührungsbereich 11 auf. Der Berührungsbereich 11 erstreckt sich beispielsweise über etwa 70 % der Scheibenlänge. Es versteht sich, dass die Länge und Form des Kontaktdrahts 6 an die jeweiligen Erfordernisse des Einzelfalls angepasst werden können. Der Kontaktdraht 6 bildet einen kapazitiven Schaltbereich 10.

In diesem Ausgestaltungsbeispiel erfolgt die elektrische Kontaktierung des kapazitiven Schaltbereichs 10 über den ersten Stromsammelleiter 22, der über eine Zuleitung 23 und ein Verbindungskabel 26 mit der Spannungsversorgung 24 und gleichzeitig mit der Sensorelektronik 14 elektrisch verbunden ist. Ein zweiter Eingang der Sensorelektronik 14 ist mit der Bezugsmasse elektrisch verbunden.
Die Heizdrähte 21 und der Kontaktdraht 6 weisen beispielsweise eine elektrisch isolierende Ummantelung mit einer matten grünen oder matten schwarzen Farbe auf, da diese weniger optisch auffällig sind, als beispielsweise reine Metalldrähte, die Licht besonders gut reflektieren können. Dies hat den weiteren Vorteil, dass Heizdrähte 21 und Kontaktdraht 6 sich auch überlappen und berühren können, ohne dass elektrische Kurzschlüsse auftreten.

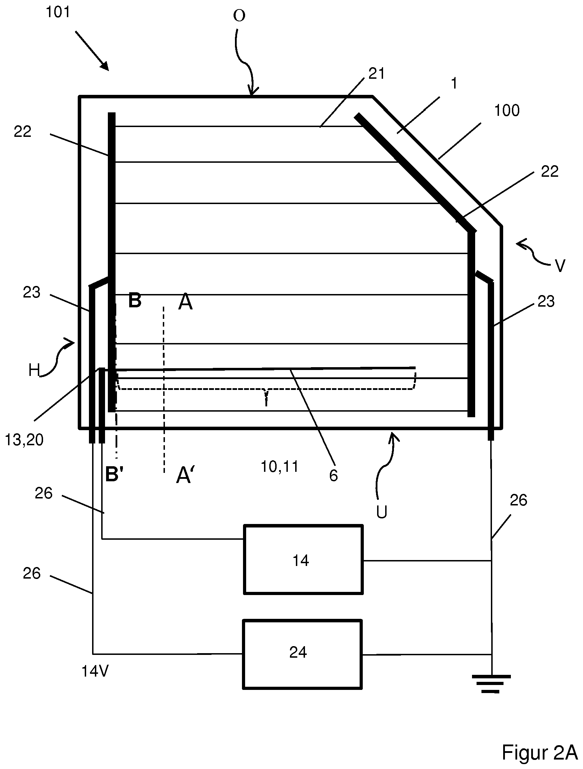

Figur 2A zweigt eine Ausgestaltung einer Schaltungsanordnung 101 einer alternativen Verbundscheibe 100, welche nicht Teil der Erfindung ist. Der Aufbau der Verbundscheibe 100 entspricht im Wesentlichen der Verbundscheibe 100 aus Figur 1A, so dass im Folgenden nur auf die Unterschiede eingegangen wird.

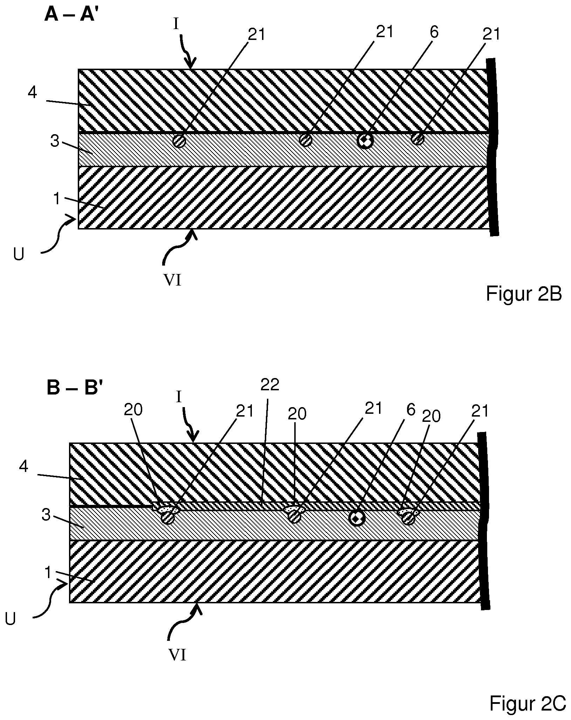

Figur 2B zeigt einen Schnitt entlang A-A' und Figur 2C einen Schnitt entlang B-B' durch die Verbundscheibe 100 aus Figur 2A. Die Verbundscheibe 100 aus Figur 2A unterscheidet sich von der Verbundscheibe 100 aus Figur 1A dadurch, dass der Kontaktdraht 6 nicht mit dem ersten Stromsammelleiter 22 elektrisch leitend (galvanisch) verbunden ist. Das heißt, es gibt keine galvanische Verbindung zwischen dem Kontaktdraht 6, der den kapazitiven Schaltbereich 10 bildet und dem Heizschaltkreis aus Heizdrähten 21, Stromsammelleiter 22 und deren Verbindungsleitungen zur Spannungsversorgung 24.

Der Kontaktdraht 6 weist in diesem Beispiel eine elektrisch isolierende Ummantelung auf und überkreuzt den ersten Stromsammelleiter 22 ohne galvanische Verbindung. Der Anschlussbereich 13 des Kontaktdrahts 6 ist dann außerhalb des ersten Stromsammelleiters 22 mit einer Zuleitung kontaktiert, die über ein Verbindungskabel 26 mit dem ersten Eingang der Sensorelektronik 14 verbunden ist. Ein zweiter Eingang der Sensorelektronik 14 ist über die Bezugsmasse mit dem zweiten Stromsammelleiter 22 und damit mit dem Heizschaltkreis elektrisch leitend (galvanisch) verbunden. Die Gesamtheit des Heizschaltkreises aus Heizdrähten 21 und Stromsammelleiter 22 und insbesondere die zum Kontaktdraht 6 unmittelbar benachbart angeordneten Heizdrähte 21 bilden somit eine zweite Elektrode zur differenziellen Kapazitätsmessung.

Es versteht sich, dass der Kontaktdraht 6 auch zwischen dem Substrat 6 und der Zwischenschicht 3 angeordnet sein kann oder im Überkreuzungsbereich durch eine weitere (lokale) Zwischenschicht von dem Stromsammelleiter elektrisch isoliert werden kann, so dass die elektrisch isolierende Ummantelung nicht zwingend notwendig ist.

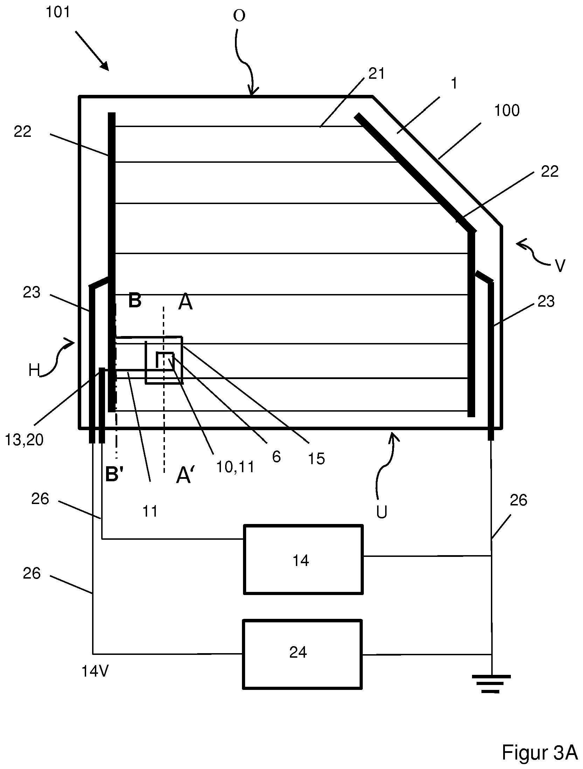

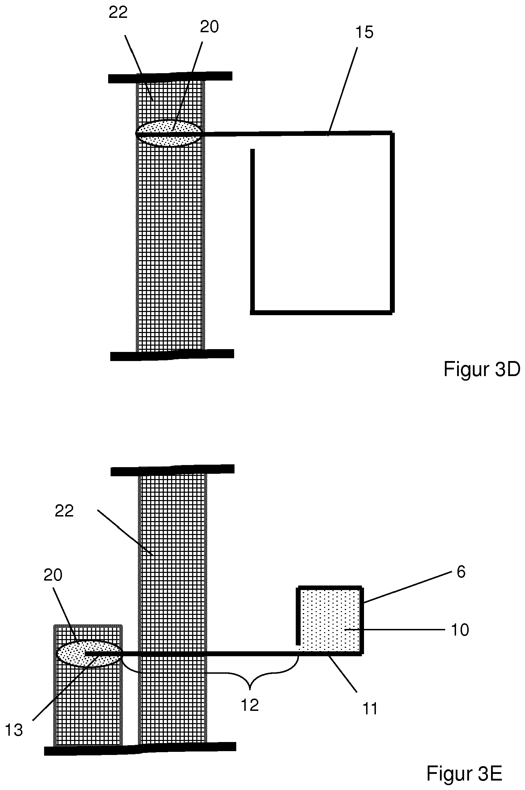

Figur 3A zweigt eine alternative Ausgestaltung einer Schaltungsanordnung 101 einer Verbundscheibe 100, welche nicht Teil der Erfindung ist. Der Aufbau der Verbundscheibe 100 entspricht im Wesentlichen der Verbundscheibe 100 und Schaltungsanordnung 101 aus Figur 2A, so dass im Folgenden nur auf die Unterschiede eingegangen wird.

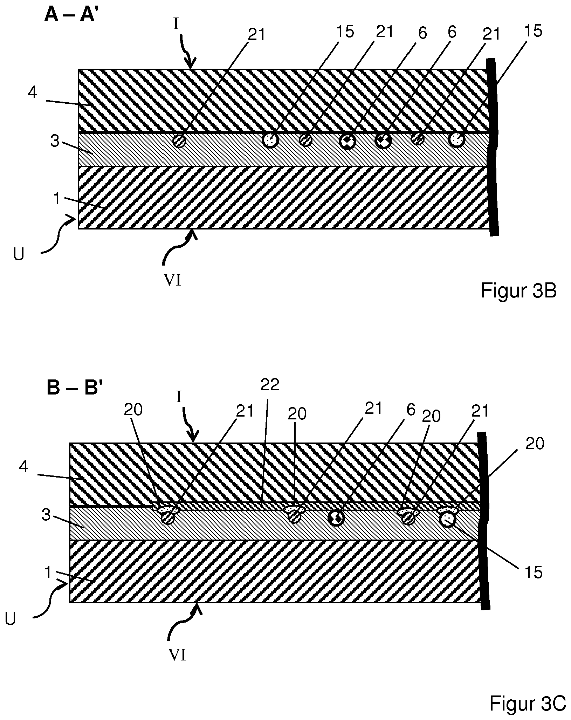

Figur 3B zeigt einen Schnitt entlang A-A' und Figur 3C einen Schnitt entlang B-B' durch die Verbundscheibe 100 aus Figur 3A. Figur 3C zweigt eine vergrößerte Darstellung eines Umgebungskontaktdrahts 15 und Figur 3D zeigt eine vergrößerte Darstellung des Kontaktdrahts 6.

Die Verbundscheibe 100 aus Figur 3A unterscheidet sich von der Verbundscheibe 100 aus Figur 2A dadurch, dass der Kontaktdraht 6 im Berührungsbereich 11 nicht geradlinig ausgebildet, sondern an einem Ende den Umriss eines Quadrats mit einer Kantenlänge von beispielweise 5 cm beschreibt. Der Berührungsbereich 11 ist über einen Zuleitungsbereich 12 aus einem geradlinigen Abschnitt des Kontaktdrahtes 6 mit dem Anschlussbereich 13 verbunden. Der Anschlussbereich 13 des Kontaktdrahts 6 ist über eine elektrische Leitungsverbindung 20 über ein Verbindungskabel 26 mit der Sensorelektronik 14 verbunden. Der Berührungsbereich 11 umschließt in diesem Beispiel eine quadratische

Fläche A von 25 cm². Durch diese Ausgestaltung wird die Empfindlichkeit des kapazitiven Schaltbereichs 10 im Berührungsbereich 11 deutlich erhöht. Die Sensorelektronik 14 kann in einfacher Weise so abgestimmt werden, dass nur bei Berührung einer der Oberflächen der Verbundscheibe 100 im Berührungsbereich 11 ein Schaltsignal ausgelöst wird und bei Berührung der Oberflächen der Verbundscheibe 100 über dem Zuleitungsbereich 12 kein Schaltsignal ausgelöst wird.

Als weiteres optionales Ausgestaltungsbeispiel weist die Verbundscheibe 100 nach Figur 3A einen elektrisch leitenden Umgebungskontaktdraht 15 auf. Der Umgebungskontaktdraht 15 weist einen geradlinigen Abschnitt und einen quadratisch geformten Abschnitt auf. Der quadratisch geformte Abschnitt mit einer Kantenlänge von beispielsweise 10 cm umgibt, in der Projektion durch die großen Oberflächen Verbundscheibe 100 gesehen, den quadratisch geformten Berührungsbereich 11. Der Umgebungskontaktdraht 15 weist in diesem Beispiel eine elektrisch isolierende Ummantelung auf, um Kurzschlüsse zu überkreuzten Heizdrähten 21 zu vermeiden. Es versteht sich, dass der Umgebungskontaktdraht 15 auch auf einer anderen Ebene der Verbundscheibe 100, beispielsweise zwischen Substrat 1 und Zwischenschicht 3 angeordnet sein kann, oder durch eine weitere Zwischenschicht oder elektrisch isolierende Folie von den Heizdrähten 21 elektrisch isoliert werden kann.

Im hier dargestellten Beispiel ist der Umgebungskontaktdraht 15 an einem Ende mit dem ersten Stromsammelleiter 22 über eine elektrische Leitungsverbindung 20 galvanisch verbunden. Durch den Umgebungskontaktdraht 15, der in der unmittelbaren Umgebung um den Berührungsbereich 11 angeordnet ist, kann die Empfindlichkeit des kapazitiven Schaltbereichs 10 nochmals deutlich gesteigert werden.

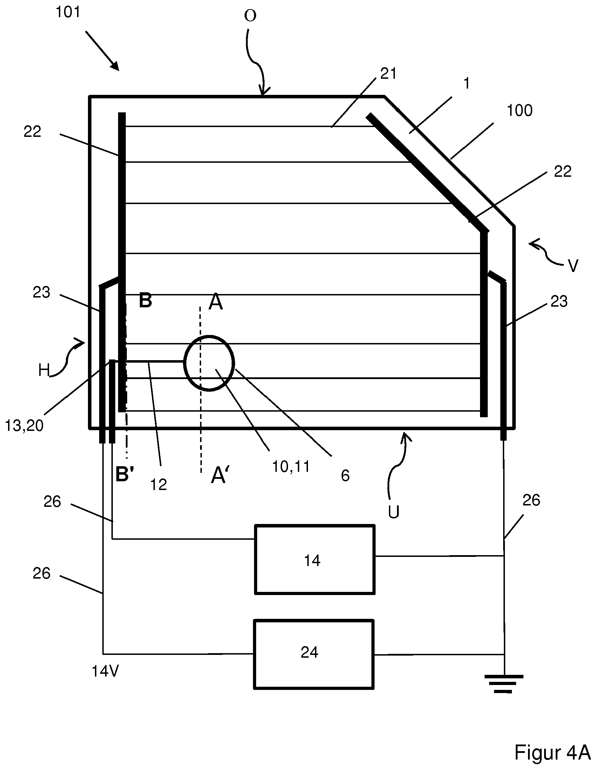

Figur 4A zeigt eine Ausgestaltung einer Schaltungsanordnung 101 einer weiteren alternativen Verbundscheibe 100, welche nicht Teil der Erfindung ist. Der Aufbau der Verbundscheibe 100 entspricht im Wesentlichen der Verbundscheibe 100 und Schaltungsanordnung 101 aus Figur 3A, so dass im Folgenden nur auf die Unterschiede eingegangen wird.

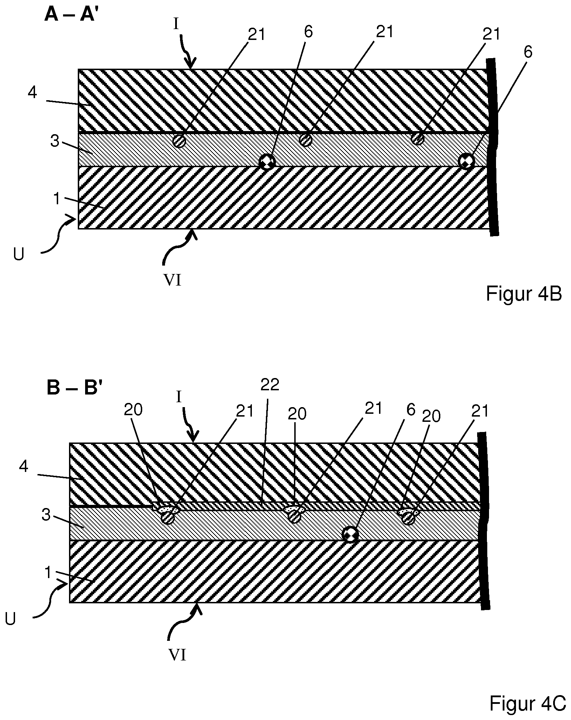

Figur 4B zeigt einen Schnitt entlang A-A' und Figur 4C einen Schnitt entlang B-B' durch die Verbundscheibe 100 aus Figur 4A.

Im Unterschied zum Kontaktdraht 6 aus Figur 3A ist der Kontaktdraht 6 im Berührungsbereich 11 hier kreisförmig ausgebildet. Der Kreis hat beispielsweise einen Durchmesser von 8 cm. Des Weiteren überlappt der Berührungsbereich 11 die beiden unmittelbar benachbarten Heizdrähte 21 (in Projektion durch die große Fläche der Verbundscheibe 100 gesehen). Wie in Figur 4C deutlich zu erkennen, ist der Kontaktdraht 6 in diesem Ausgestaltungsbeispiel zwischen dem Substrat 1 und der Zwischenschicht 3 angeordnet. Die Heizdrähte 6 sind weiterhin beispielsweise zwischen Deckscheibe 4 und Zwischenschicht 3 angeordnet. Dies erhöht die Selektivität des kapazitiven Schaltbereichs 10. Das heißt, bei einer Berührung der außenseitigen Oberfläche IV der Verbundscheibe 100 über das Substrat 1 ist die in der Sensorelektronik gemessene Kapazitätsänderung größer als bei einer Berührung der außenseitigen Oberfläche I der Verbundscheibe 100 über die Deckscheibe 4.

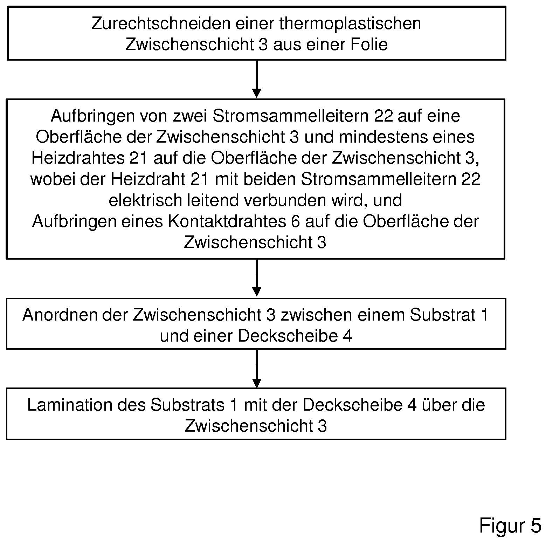

Figur 5 zeigt ein Flussdiagramm eines Ausführungsbeispiels des erfindungsgemäßen Verfahrens zur Herstellung einer erfindungsgemäßen beheizbaren Verbundscheibe mit kapazitivem Schaltbereich.

### Bezugszeichenliste:

- 1: Substrat
- 3: Zwischenschicht
- 4: Deckscheibe
- 6: Kontaktdraht
- 10: kapazitiver Schaltbereich
- 11: Berührungsbereich
- 12: Zuleitungsbereich
- 13: Anschlussbereich
- 14: kapazitive Sensorelektronik
- 15: Umgebungskontaktdraht
- 20: elektrische Leitungsverbindung
- 21: Heizdraht
- 22: Stromsammelleiter
- 23: Zuleitung des Stromsammelleiters 22
- 24: Spannungsversorgung
- 26: Verbindungskabel
- 100: Verbundscheibe
- 101: Scheibenanordnung

- A: Fläche des Berührungsbereichs 11
- A-A': Schnittlinie
- B-B': Schnittlinie
- I: außenseitige Oberfläche der Deckscheibe 4
- IV: außenseitigen Oberfläche des Substrats 1

- H: Hinterkante der Verbundscheibe 100
- O: Oberkante der Verbundscheibe 100
- V: Vorderkante der Verbundscheibe 100
- U: Unterkante der Verbundscheibe 100

## Patentansprüche

1. Beheizbare Verbundscheibe (100) mit kapazitivem Schaltbereich (10), umfassend:
- ein Substrat (1) und eine Deckscheibe (4),
- mindestens eine Zwischenschicht (3), die zwischen dem Substrat (1) und der Deckscheibe (4) angeordnet ist,
- mehrere Heizdrähte (21) und mindestens zwei Stromsammelleiter (22), die zwischen der Deckscheibe (4) und der Zwischenschicht (3) angeordnet sind, wobei die Heizdrähte (21) mit den Stromsammelleitern (22) derart elektrisch leitend verbunden sind, dass bei Anlegen einer elektrischen Spannung an die Stromsammelleiter (22) ein Heizstrom durch die Heizdrähte (21) fließen kann, wodurch die Heizdrähte (21) beheizbar sind,
wobei
- zwischen dem Substrat (1) und der Zwischenschicht (3) oder zwischen der Deckscheibe (4) und der Zwischenschicht (3) ein elektrisch leitfähiger Kontaktdraht (6) angeordnet ist, welcher von den Heizdrähten (21) verschieden ist,
- mindestens ein Bereich des elektrisch leitfähigen Kontaktdrahts (6) einen kapazitiven Schaltbereich (10) bildet,
- der kapazitive Schaltbereich (10) mindestens einen Berührungsbereich (11) und einen Anschlussbereich (13) aufweist, der Berührungsbereich (11) mit dem Anschlussbereich (13) elektrisch verbunden ist und der Anschlussbereich (13) mit einer Sensorelektronik (14) elektrisch verbindbar ist, wobei
- der Kontaktdraht (6) ein frei mündendes Ende aufweist, wobei
- der Kontaktdraht (6) keinen direkten Berührungskontakt zu den Heizdrähten (21) hat,
**dadurch gekennzeichnet, dass** der Kontaktdraht (6) an genau einem Anschlussbereich (13) mit einem der beiden Stromsammelleiter (22) galvanisch verbunden ist, und dass sich der Kontaktdraht (6) zumindest in der Projektion senkrecht zu einer Scheibenfläche, zwischen zwei unmittelbar angrenzenden Heizdrähten (21) befindet, wobei sich die Heizdrähte (21) jeweils durchgehend von dem einen Stromsammelleiter (22) zu dem anderen Stromsammelleiter (22) erstrecken.

2. Verbundscheibe (100) nach Anspruch 1 , wobei sich der Kontaktdraht (6) über mindestens 10%, vorzugsweise mindestens 20%, stärker bevorzugt mindestens 30%, noch stärker bevorzugt mindestens 40% und noch stärker bevorzugt mindestens 50% eines kürzesten Abstands zwischen den beiden Stromsammelleitern (22) erstreckt.

3. Verbundscheibe (100) nach Anspruch 1 oder 2, wobei mindestens ein Umgebungskontaktdraht (15) zwischen dem Substrat (1) und der Zwischenschicht (2) oder zwischen der Deckscheibe (4) und der Zwischenschicht (2) angeordnet ist.

4. Verbundscheibe (100) nach einem der Ansprüche 1 bis 3, wobei der Berührungsbereich (11) über einen Zuleitungsbereich (12) mit dem Anschlussbereich (13) elektrisch verbunden ist und der Zuleitungsbereich (12) bevorzugt eine Länge l_{z} von 1 cm bis 70 cm, besonders bevorzugt von 1 cm bis 8 cm aufweist.

5. Verbundscheibe (100) nach einem der Ansprüche 1 bis 4, wobei der Berührungsbereich (11) eine Fläche (A) umschließt, wobei die Fläche (A) von 1 cm² bis 200 cm², bevorzugt von 1 cm² bis 50 cm² beträgt und/oder eine rechteckförmige, quadratische, trapezförmige, dreiecksförmige, kreisförmige, elliptische oder tropfenförmige Form oder abgerundete Ecken aufweist.

6. Verbundscheibe (100) nach einem der Ansprüche 1 bis 5, wobei die Zwischenschicht (3) transparent ist, Polyvinybutyral (PVB) enthält oder daraus besteht, und/oder eine relative Permittivität ε_{r,3} von 2 bis 4 und besonders bevorzugt von 2,1 bis 2,9 aufweist.

7. Verbundscheibe (100) nach einem der Ansprüche 1 bis 6, wobei das Substrat (1) und/oder die Deckscheibe (4) Glas, bevorzugt Flachglas, Floatglas, Quarzglas, Borosilikatglas, Kalk-Natron-Glas, oder Polymere, bevorzugt Polyethylen, Polypropylen, Polycarbonat, Polymethylmethacrylat und/oder Gemische davon enthält, und/oder eine relative Permittivität ε_{r,1/4} von 2 bis 8 und besonders bevorzugt von 6 bis 8 aufweist.

8. Scheibenanordnung (101) umfassend:
- eine Verbundscheibe (100) nach einem der Ansprüche 1 bis 7 und
- eine kapazitive Sensorelektronik (14), die mit dem Anschlussbereich (13) des Kontaktdrahts (6) galvanisch verbunden ist.

9. Scheibenanordnung (101) nach Anspruch 8, wobei die Empfindlichkeit der Sensorelektronik (14) so gewählt ist, dass sie bei Berührung des Berührungsbereichs (11) mit einem menschlichen Finger auf einer äußeren Oberfläche (IV) des Substrats (1) ein Schaltsignal ausgibt und bei Berührung des Berührungsbereichs (11) auf einer äußeren Oberfläche (I) der Deckscheibe (4) kein Schaltsignal oder ein anderes Schaltsignal ausgibt.

10. Scheibenanordnung (101) nach Anspruch 8 und einer Verbundscheibe nach Anspruch 4, wobei die Empfindlichkeit der Sensorelektronik (14) so gewählt ist, dass sie bei Berührung des Berührungsbereichs (11) auf einer äußeren Oberfläche (IV) des Substrats (1) und/oder einer äußeren Oberfläche (I) der Deckscheibe (4) mit einem menschlichen Finger ein Schaltsignal ausgibt und bei Berührung des Zuleitungsbereichs (12) auf der äußeren Oberfläche (IV) des Substrats (1) und/oder der äußeren Oberfläche (I) der Deckscheibe (4) kein Schaltsignal oder ein anderes Schaltsignal ausgibt.

11. Verfahren zur Herstellung einer Verbundscheibe (100) mit kapazitivem Schaltbereich (10) nach einem der Ansprüche 1 bis 7, umfassend:
(a) Zurechtschneiden einer Zwischenschicht (3),
(b) Aufbringen von zwei Stromsammelleitern (22) auf eine Oberfläche der Zwischenschicht (3) und mehrerer Heizdrähte (21) auf die Oberfläche der ersten Zwischenschicht (3), wobei die Heizdrähte (21) mit beiden Stromsammelleitern (22) elektrisch leitend verbunden werden, und Aufbringen eines Kontaktdrahtes (6) auf die Oberfläche der Zwischenschicht (3),
(c) Herstellen einer Stapelfolge aus einem Substrat (1), der Zwischenschicht (3) mit den Heizdrähten (21), den Stromsammelleitern (22) und Kontaktdraht (6), und einer Deckscheibe (4), und
(d) Laminieren der Stapelfolge zu einer Verbundscheibe (100).

12. Verwendung der Verbundscheibe (100) nach einen der Ansprüche 1 bis 7 in Fortbewegungsmitteln für den Verkehr auf dem Lande, in der Luft oder zu Wasser, insbesondere in Kraftfahrzeugen beispielsweise als Windschutzscheibe, Heckscheibe, Seitenscheiben und/oder Dachscheibe sowie als funktionales Einzelstück, und als Einbauteil in Möbeln, Geräten und Gebäuden, insbesondere als elektrischer Heizkörper.

## Claims

1. Heatable composite pane (100) having a capacitive switching region (10), comprising:
- a substrate (1) and a cover pane (4),
- at least one intermediate layer (3), which is arranged between the substrate (1) and the cover pane (4),
- plural heating wires (21) and at least two busbars (22), which are arranged between the cover pane (4) and the intermediate layer (3), wherein the heating wires (21) are electrically conductingly connected to the busbars (22) such that upon application of an electrical voltage to the busbars (22), a heating current can flow through the heating wires (21), whereby the heating wires (21) can be heated,
wherein
- an electrically conductive contact wire (6), which is different from the heating wires (21), is arranged between the substrate (1) and the intermediate layer (3) or between the cover pane (4) and the intermediate layer (3),
- at least one region of the electrically conductive contact wire (6) forms a capacitive switching region (10),
- the capacitive switching region (10) has at least one contact region (11) and one connection region (13), the contact region (11) is electrically connected to the connection region (13), and the connection region (13) can be electrically connected to a sensor electronics system (14), wherein
- the contact wire (6) has a free end, wherein
- the contact wire (6) has no direct physical contact with the at least one heating wire (21),
**characterized in that** the contact wire (6) is galvanically connected to one of the two busbars (22) at precisely one connection region (13), and that the contact wire (6) is situated, at least in the projection perpendicular to a pane surface, between two immediately adjacent heating wires (21), wherein the two heating wires (21) extend in each case continuously from one busbar (22) to the other busbar (22).

2. Composite pane (100) according to claim 1, wherein the contact wire (6) extends over at least 10%, preferably at least 20%, more preferably at least 30%, even more preferably at least 40%, and even more preferably at least 50% of a shortest distance between the two busbars (22).

3. Composite pane (100) according to claim 1 or 2, wherein at least one surrounding contact wire (15) is arranged between the substrate (1) and the intermediate layer (2) or between the cover pane (4) and the intermediate layer (2).

4. Composite pane (100) according to one of claims 1 through 3, wherein the contact region (11) is electrically connected via a supply line region (12) to the connection region (13) and the supply line region (12) preferably has a length l_{z} of 1 cm to 70 cm, particularly preferably of 1 cm to 8 cm.

5. Composite pane (100) according to one of claims 1 through 4, wherein the contact region (11) encompasses an area (A), wherein the area (A) is from 1 cm² to 200 cm², preferably from 1 cm² to 50 cm², and/or has a rectangular, square, trapezoidal, triangular, circular, elliptical, or drop-shaped form or rounded corners.

6. Composite pane (100) according to one of claims 1 through 5, wherein the intermediate layer (3) is transparent, contains or is made of polyvinyl butyral (PVB), and/or has a relative permittivity ε_{r,3} of 2 to 4 and particularly preferably of 2.1 to 2.9.

7. Composite pane (100) according to one of claims 1 through 6, wherein the substrate (1) and/or the cover pane (4) contains glass, preferably flat glass, float glass, quartz glass, borosilicate glass, soda lime glass, or polymers, preferably polyethylene, polypropylene, polycarbonate, polymethylmethacrylate, and/or mixtures thereof, and/or has a relative permittivity ε_{r,1/4} of 2 to 8 and particularly preferably of 6 to 8.

8. Pane arrangement (101) comprising:
- a composite pane (100) according to one of claims 1 through 7 and
- a capacitive sensor electronics system (14), which is galvanically connected to the connection region (13) of the contact wire (6).

9. Pane arrangement (101) according to claim 8, wherein the sensitivity of the sensor electronics system (14) is selected such it outputs a switching signal upon contact of the contact region (11) with a human finger on an outer surface (IV) of the substrate (1) and outputs no switching signal or a different switching signal upon contact of the contact region (11) on an outer surface (I) of the cover pane (4).

10. Pane arrangement (101) according to claim 8 and a composite pane according to claim 4, wherein the sensitivity of the sensor electronics system (14) is selected such that it outputs a switching signal upon contact of the contact region (11) on an outer surface (IV) of the substrate (1) and/or an outer surface (I) of the cover pane (4) with a human finger and outputs no switching signal or a different switching signal upon contact of the supply line region (12) on the outer surface (IV) of the substrate (1) and/or the outer surface (I) of the cover pane (4).

11. Method for producing a composite pane (100) having a capacitive switching region (10) according to one of claims 1 through 7, comprising:
(a) Cutting an intermediate layer (3) to size,
(b) Applying two busbars (22) on a surface of the intermediate layer (3) and plural heating wires (21) on the surface of the first intermediate layer (3), wherein the heating wires (21) are electrically conductingly connected to both busbars (22), and applying a contact wire (6) on the surface of the intermediate layer (3),
(c) Producing a stack sequence of a substrate (1), the intermediate layer (3) with the heating wires (21), the busbars (22), and contact wire (6), and a cover pane (4), and
(d) Laminating the stack sequence to form a composite pane (100).

12. Use of the composite pane (100) according to one of claims 1 through 7 in means of transportation for travel on land, in the air, or on water, in particular in motor vehicles, for example, as a windshield, rear window, side window, and/or roof panel as well as as a functional individual piece, and as a built-in component in furniture, appliances, and buildings, in particular as an electric heater.

## Revendications

1. Vitre composite chauffante (100) ayant une zone de commutation capacitive (10), comprenant :
- un substrat (1) et une vitre de recouvrement (4),
- au moins une couche intermédiaire (3), qui est disposée entre le substrat (1) et la vitre de recouvrement (4),
- plusieurs fils chauffants (21) et au moins deux barres omnibus (22), qui sont disposés entre la vitre de recouvrement (4) et la couche intermédiaire (3), les fils chauffants (21) étant reliés de manière conductrice de l'électricité aux barres conductrices (22) de telle sorte que, lors de l'application d'une tension électrique aux barres conductrices (22), un courant de chauffage peut circuler à travers les fils chauffants (21), ce qui permet de chauffer les fils chauffants (21), où
- un fil de contact (6) électriquement conducteur, différent des fils chauffants (21), est disposé entre le substrat (1) et la couche intermédiaire (3) ou entre la vitre de recouvrement (4) et la couche intermédiaire (3),
- au moins une région du fil de contact électriquement conducteur (6) forme une région de commutation capacitive (10),
- la zone de commutation capacitive (10) présente au moins une zone de contact (11) et une zone de raccordement (13), la zone de contact (11) est reliée électriquement à la zone de raccordement (13), et la zone de raccordement (13) peut être reliée électriquement à une électronique de capteur (14), où
- le fil de contact (6) a une extrémité libre, où
- le fil de contact (6) n'a pas de contact physique direct avec au moins un fil chauffant (21), **caractérisé en ce que** le fil de contact (6) est relié galvaniquement à l'une des deux barres conductrices (22) dans une zone de raccordement (13) précisément, et **en ce que** le fil de contact (6) se trouve, au moins dans la projection perpendiculaire à une surface de vitre, entre deux fils chauffants (21) directement voisins, les deux fils chauffants (21) s'étendant chacun de manière continue d'une barre conductrice (22) à l'autre barre conductrice (22).

2. Vitre composite (100) selon la revendication 1, dans laquelle le fil de contact (6) s'étend sur au moins 10 %, de préférence au moins 20 %, de préférence au moins 30 %, encore mieux au moins 40 %, et encore mieux au moins 50 % d'une distance la plus courte entre les deux barres conductrices (22).

3. Vitre composite (100) selon la revendication 1 ou 2, dans laquelle au moins un fil de contact (15) périphérique est disposé entre le substrat (1) et la couche intermédiaire (2) ou entre la vitre de recouvrement (4) et la couche intermédiaire (2).

4. Vitre composite (100) selon l'une des revendications 1 à 3, dans laquelle la zone de contact (11) est reliée électriquement à la zone de raccordement (13) par l'intermédiaire d'une zone de ligne d'alimentation (12) et la zone de ligne d'alimentation (12) présente de préférence une longueur l_{z} de 1 cm à 70 cm, en particulier de préférence de 1 cm à 8 cm.

5. Vitre composite (100) selon l'une des revendications 1 à 4, dans laquelle la zone de contact (11) comprend une surface (A), la surface (A) étant de 1 cm² à 200 cm², de préférence de 1 cm² à 50 cm², et/ou présente une forme rectangulaire, carrée, trapézoïdale, triangulaire, circulaire, elliptique ou en goutte d'eau ou des coins arrondis.

6. Vitre composite (100) selon l'une des revendications 1 à 5, dans laquelle la couche intermédiaire (3) est transparente, contient ou est constituée de butyral de polyvinyle (PVB), et/ou présente une permittivité relative ε_{r,3} de 2 à 4 et, de préférence, de 2,1 à 2,9.

7. Vitre composite (100) selon l'une des revendications 1 à 6, dans laquelle le substrat (1) et/ou la vitre de recouvrement (4) contient du verre, de préférence du verre plat, du verre flotté, du verre de quartz, du verre borosilicaté, du verre sodocalcique ou des polymères, de préférence du polyéthylène, du polypropylène, du polycarbonate, du polyméthylméthacrylate, et/ou des mélanges de ceux-ci, et/ou présente une permittivité relative ε_{r,1/4} de 2 à 8 et particulièrement de préférence de 6 à 8.

8. Arrangement de panneaux (101) comprenant :
- un vitrage composite (100) selon l'une des revendications 1 à 7 et
- un système électronique de capteur capacitif (14), qui est relié galvaniquement à la zone de connexion (13) du fil de contact (6).

9. Agencement de vitre (101) selon la revendication 8, dans lequel la sensibilité du système électronique de capteur (14) est choisie de telle sorte qu'il émet un signal de commutation lors du contact de la zone de contact (11) avec un doigt humain sur une surface extérieure (IV) du substrat (1) et n'émet aucun signal de commutation ou un signal de commutation différent lors du contact de la zone de contact (11) sur une surface extérieure (I) de la vitre de recouvrement (4).

10. Agencement de vitre (101) selon la revendication 8 et vitre composite selon la revendication 4, dans lequel la sensibilité du système électronique de capteur (14) est choisie de telle sorte qu'il émet un signal de commutation lors du contact de la zone de contact (11) sur une surface extérieure (IV) du substrat (1) et/ou une surface extérieure (I) de la vitre de recouvrement (4) avec un doigt humain et n'émet aucun signal de commutation ou émet un signal de commutation différent lors du contact de la zone de ligne d'alimentation (12) sur la surface extérieure (IV) du substrat (1) et/ou la surface extérieure (I) de la vitre de recouvrement (4).

11. Procédé de fabrication d'une vitre composite (100) présentant une zone de commutation capacitive (10) selon l'une des revendications 1 à 7, comprenant :
(a) Découpage d'une couche intermédiaire (3),
(b) Application de deux barres conductrices (22) sur une surface de la couche intermédiaire (3) et de plusieurs fils chauffants (21) sur la surface de la première couche intermédiaire (3), les fils chauffants (21) étant connectés de manière électriquement conductrice aux deux barres conductrices (22), et application d'un fil de contact (6) sur la surface de la couche intermédiaire (3),
(c) Production d'une séquence d'empilement d'un substrat (1), de la couche intermédiaire (3) avec les fils chauffants (21), les barres omnibus (22) et le fil de contact (6), et d'une vitre de recouvrement (4), et
(d) Laminer la séquence de la pile pour former un vitrage composite (100).

12. Utilisation de la vitre composite (100) selon l'une des revendications 1 à 7 dans des moyens de transport pour les déplacements sur terre, dans les airs ou sur l'eau, en particulier dans des véhicules automobiles, par exemple comme pare-brise, lunette arrière, fenêtre latérale et/ou panneau de toit ainsi que comme pièce individuelle fonctionnelle, et comme élément intégré dans des meubles, des appareils et des bâtiments, en particulier comme chauffage électrique.
